# EUROPÄISCHE PATENTSCHRIFT

(11) **EP 1 011 944 B1**
(45) Veröffentlichungstag und Bekanntmachung des Hinweises auf die Patenterteilung: **02.05.2003**
(21) Anmeldenummer: 98945077.0
(22) Anmeldetag: 10.09.1998
(51) Int. Cl.: B29B 17/00, B26D 1/00, B29L 30/00, B09B 3/00

(54) **VERFAHREN UND VORRICHTUNG ZUM VERARBEITEN VON REIFEN**
METHOD AND DEVICE FOR PROCESSING TIRES
PROCEDE ET DISPOSITIF DE TRANSFORMATION DE PNEUMATIQUES

(30) Priorität: 10.09.1997 DE 19740413
(43) Veröffentlichungstag der Anmeldung: 28.06.2000
(60) Teilanmeldung: 02090165.8
(73) Patentinhaber: Schmeling, Burkhard, 15344 Strausberg (DE)
(72) Erfinder: Schmeling, Burkhard, 15344 Strausberg (DE)
(74) Vertreter: Hengelhaupt, Jürgen, Dipl.-Ing.
(86) Internationale Anmeldenummer: DE9802758
(87) Internationale Veröffentlichungsnummer: WO99012717

(56) Entgegenhaltungen:
- WO-A-90/05219
- WO-A-97/21870
- WO-A-97/26122
- DE-A- 3 308 651
- DE-A- 3 829 615
- DE-A- 4 200 949
- US-A- 4 142 821
- US-A- 5 044 057
- PATENT ABSTRACTS OF JAPAN vol. 095, no. 010, 30. November 1995 & JP 07 186142 A (TAMOTSU IGARASHI;OTHERS: 02), 25. Juli 1995

## Beschreibung

Die Erfindung betrifft ein Verfahren zum Verarbeiten von Reifen und zur Herstellung von aus dem Reifenmaterial bestehenden Produkten in Form von Flächengebilden oder Körpern, beispielsweise Blöcke, Hohlkörper, Matten oder Stränge, welche aus den geschnittenen Reifen hergestellt sind.

Die Erfindung ist anwendbar insbesondere zur Umformung von nicht mehr verkehrstechnisch verwertbaren PKW-, LKW- oder Flugzeugreifen in einen neuen Grundbaustein, der als Ausgangsmaterial für die Herstellung von Produkten in vielfältigen Bereichen der Wirtschaft eingesetzt werden kann. Zwischenprodukt für die Herstellung neuer Endprodukte sind aus den Reifen geschnittene Ringe.

Es ist bekannt, nicht mehr zugelassene Reifen zu zerkleinern, beispielsweise durch Schreddern, und die entstehenden Fragmente als Zuschlagmaterial, beispielsweise zur Zementherstellung oder als Füllstoff im Straβenunterbau, zu verwenden. Weitere Verwendungsmöglichkeiten von Altreifen sind die Verbrennung und damit die Erzeugung von Wärmeenergie, die chemische Auflösung zu Rohprodukten oder die Lagerung auf Deponien.

Nachteilig an den bekannten Verwendungsmöglichkeiten ist, daß diese eine Wiederverwendung nur mit Wert-, Rohstoff- oder Eigenschaftsverlust zulassen. Eine Zentralisierung der Verwendung geht nur über das Transportieren der Reifen mit vollem Volumenumfang.

Die DE 39 33 729 A1 beschreibt ein Verfahren zur Verwertung von Altreifen, wobei die Reifen zerschnitten und zu Endlosbändern zusammengeführt werden. Die Anwendungsgebiete derartiger Endlosbänder sind relativ beschränkt.

In der DE 33 086 51 A1 wird ein Netzwerk aus reifenförmigen Körpern beschrieben, in welchem die Reifen unzerteilt oder in Ringe oder Streifen geschnitten angeordnet sind.

Für die Verbindung von aus Reifen hergestellten Ringen sind zusätzliche Verbindungselemente wie Nieten, Klammern oder Nadeln notwendig .

Mit der DE 42 009 49 A1 wird ein Verfahren und eine Vorrichtung zur Zerlegung von Altreifen beschrieben, mit welcher ein fixierter, rotierend angetriebener Reifen durch beweglich angeordnete Messer von außen zerschnitten wird, wodurch die Reifenlauffläche, zwei Steitenwände und zwei Wulstringe anfallen.

Der Erfindung liegt daher die Aufgabe zugrunde, ein Verfahren zu schaffen, mit welchem eine effektive Aufarbeitung von verschiedensten Reifen ermöglicht wird und über mit einfachen Mitteln preiswert herstellbare Zwischenprodukte in Form geschnittener Ringe neue Endprodukte mit hohem Verwendungswert geschaffen werden ohne Verwendung zusätzlicher Verbindungselemente.

Es ist weiterhin Aufgabe der Erfindung, neuartige Anwendungsgebiete und Verwendungen der Endprodukte aufzuzeigen.

Diese Aufgabe wird erfindungsgemäß gelöst durch die Merkmale der Ansprüche 1, 9,10 und 14.
Zweckmäßige Ausgestaltungen der Erfindung sind in den Unteransprüchen enthalten.

Ein besonderer Vorteil der Erfindung besteht darin, daß die Umformung der Reifen in das Zwischenprodukt Ringe eine vollständig umweltfreundliche Produktionsmethode ist, bei der kein Abfall entsteht und keine Schadstoffe freigesetzt werden, indem die Reifen durch eine Aufeinanderfolge von Schnitten zerlegt werden derart, daß die zwei Seitenteile von der Lauffläche abgetrennt werden und die aus den Seitenteilen und/oder der Lauffläche entstehenden Ringe zu neuen Produkten miteinander verbunden werden. Auch der gummiummantelte Metallring, der den festen Sitz auf der Felge gewährleistet, kann weiterverwertet werden.

Alle Reifen, die nicht runderneuert werden können, nicht deformiert sind und nicht in Querrrichtung geteilt worden sind, können für das erfindungsgemäße Verfahren verwendet werden. Das Verfahren ermöglicht für die Reifen eine Umformung am Anfallort.

Ein weiterer Vorteil der Erfindung besteht darin, daß die Elastizität der Ringe mit den Vorzügen des Reifens anteilsmäßig erhalten bleibt.
Durch die entstandene Ringform reduzieren sich Fläche und Volumen der Transportmasse auf Materialvolumen bzw. Materialwichte. Der Reifen ist in der neuen Form, also als Ring, so zu transportieren, daß er das vorherige Volumen eines ganzen Reifens nicht mehr erreicht. Die entstandenen Ringe sind zwei- und dreidimensional in jede beliebige Form zu bringen, die der entstandene Ring zuläßt.
Die Ringe sind in geeigneter Form stapelbar und transportabel. Werden die Reifen zu einer stationären Schneidanlage oder auch einer anderen Verwertungsanlage transportiert, so ist es zur Transportraumeinsparung vorteilhaft, daß die Reifen einmal entlang der Mitte der Lauffläche durchschnitten werden derart, daß zwei U-förmig ausgebildete Reifenteile entstehen, welche ineinander stapelbar sind.

Die Erfindung soll nachstehend anhand von zumindest teilweise in den Figuren dargestellten Ausführungsbeispielen näher erläutert werden. Es zeigen:
- Fig. 1: eine stilisierte Darstellung der Schnittführung an einem zur Hälfte dargestellten Reifen,
- Fig. 2: die Produkte aus der Schnittführung gemäß Fig. 1,
- Fig. 3A: die Entstehung einer Ringkette,
- Fig. 3B: die Entstehung eines Geflechtes,
- Fig. 3C: der Aufbau eines Grundelementes (Viererelement),
- Fig. 3D: der Aufbau eines Grundelementes (Dreierelement),
- Fig. 3E: die Entstehung eines Netzes aus Grundelementen gemäß Fig. 3C,
- Fig. 3F: die Entstehung einer Matte aus Grundelementen gemäß Fig. 3C,
- Fig. 3G: die Entstehung eines Körpers aus Grundelementen gemäß Fig. 3C,
- Fig. 3H: die Entstehung eines gewölbten Körpers aus Grundelementen gemäß Fig. 3C,
- Fig. 3K: einen Ausschnitt aus einer ersten geflochtenen Matte,
- Fig. 3L: einen geflochtenen Sack,
- Fig. 3M: einen geflochtenen röhrenförmigen Hohlkörper mit Boden,
- Fig. 3N: einen Ausschnitt aus einer zweiten geflochtenen Matte,
- Fig. 30: einen Ausschnitt aus einer dritten geflochtenen Matte,

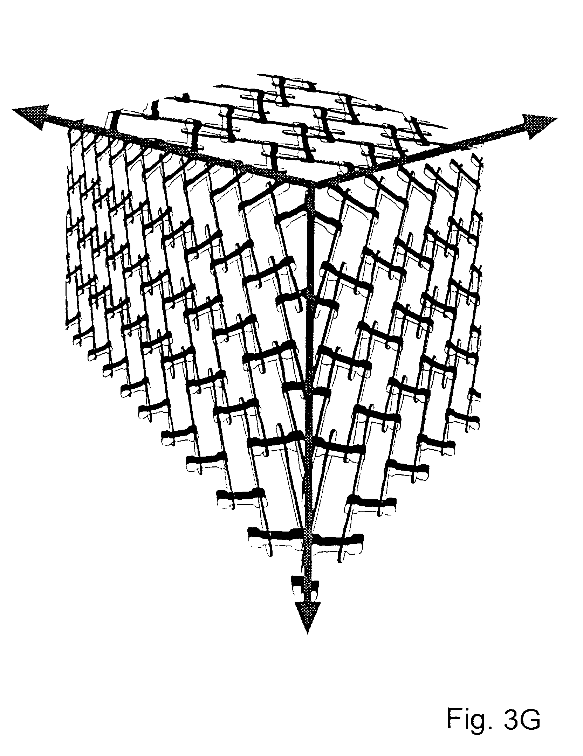

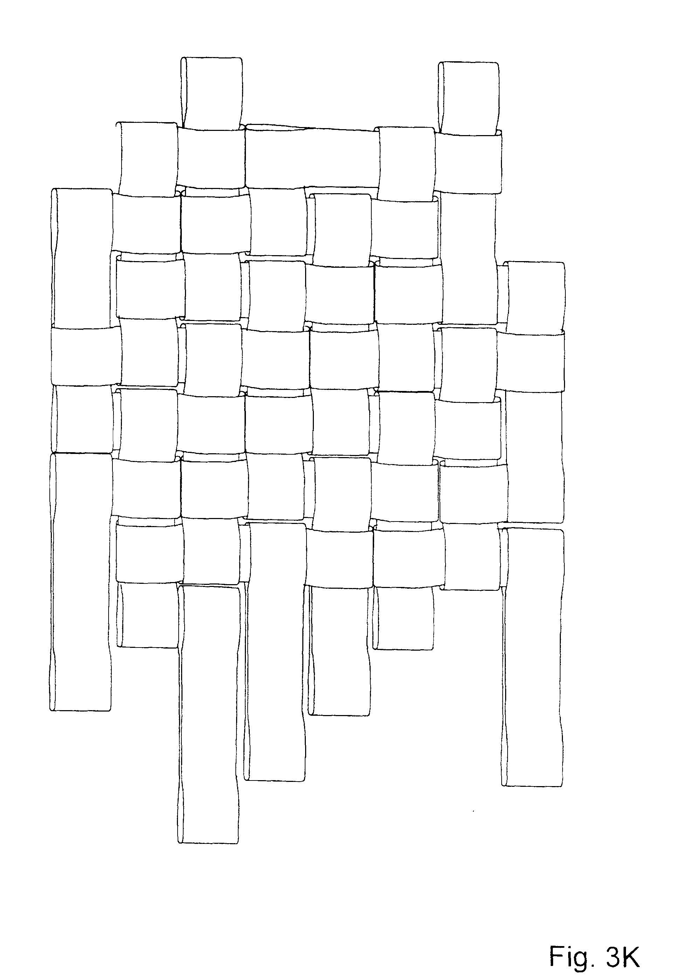

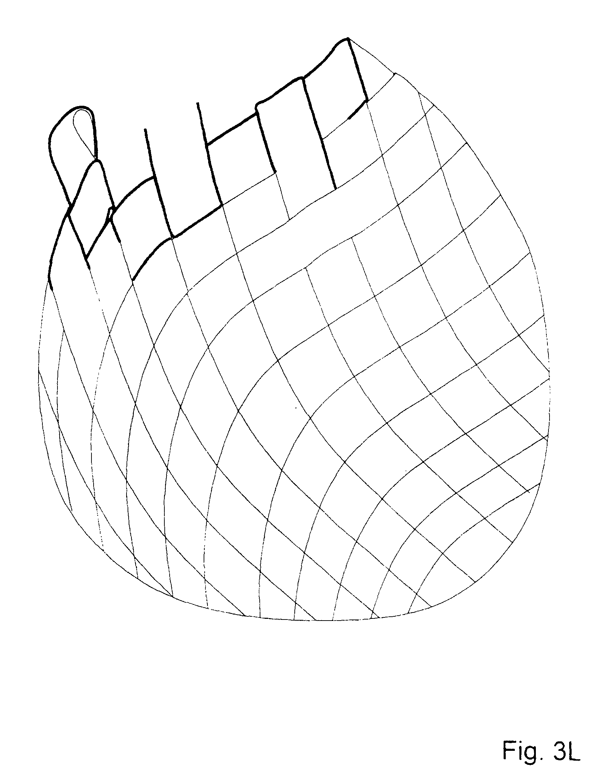

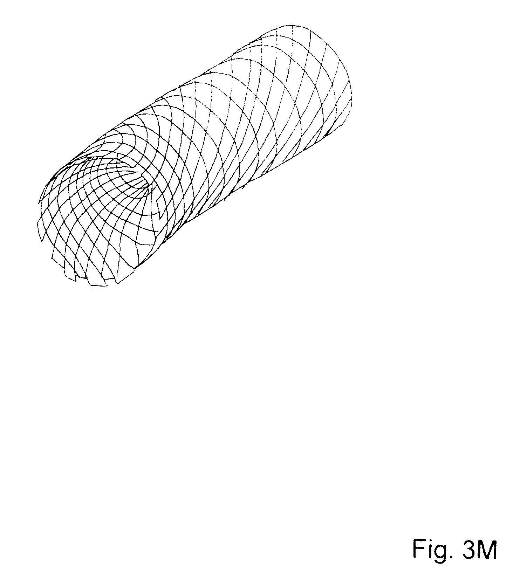

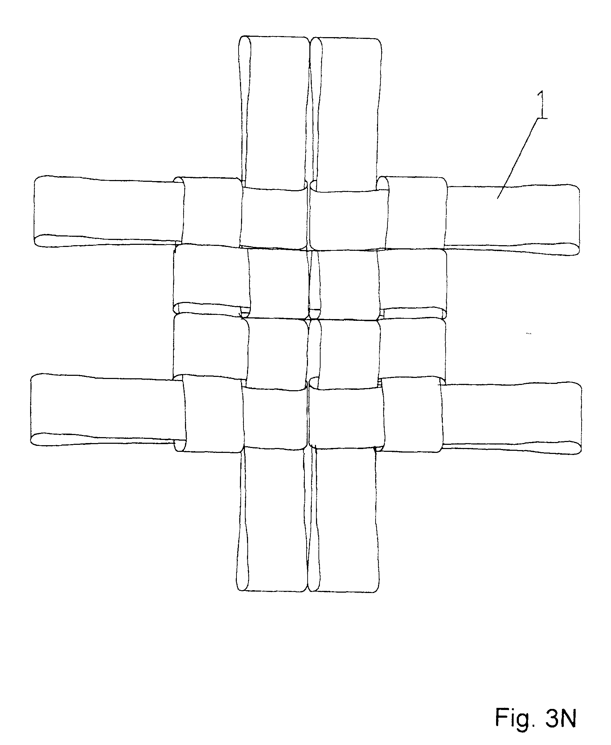

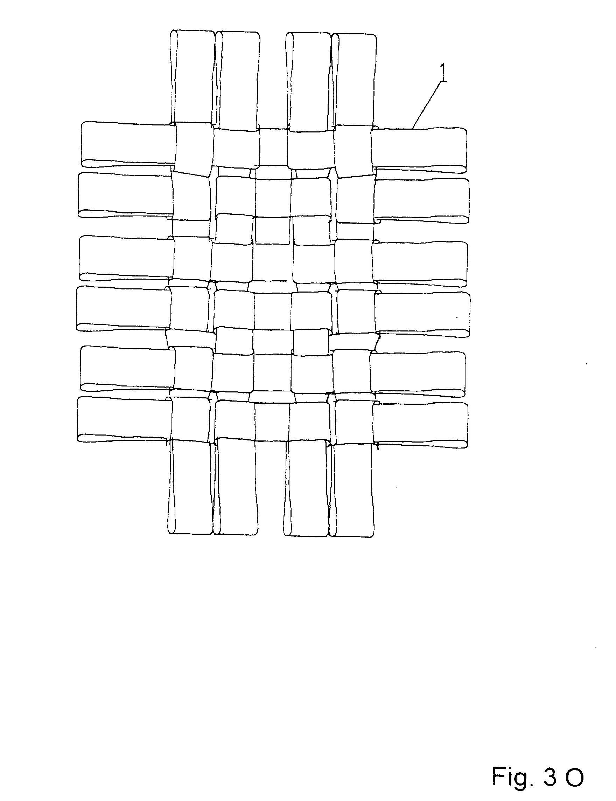

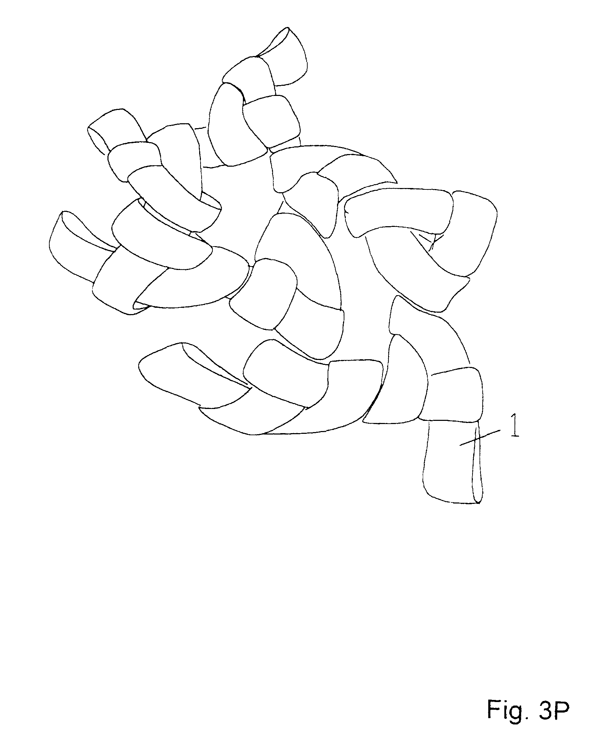

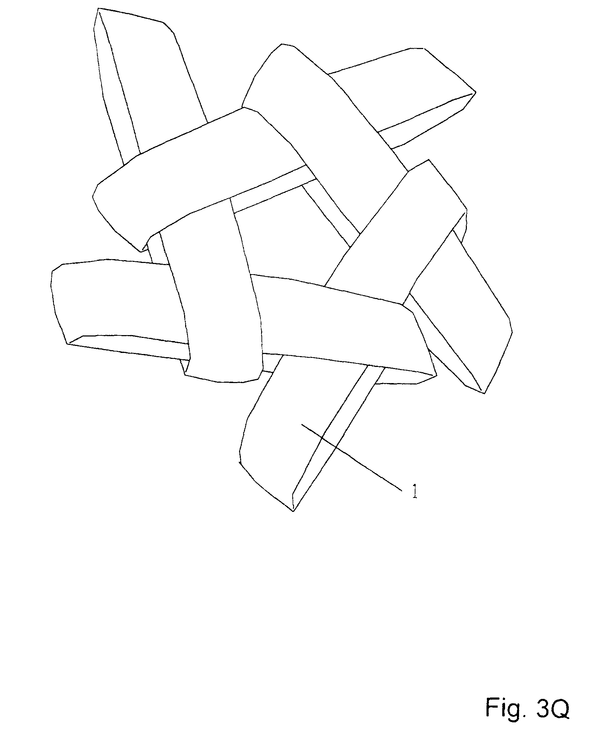

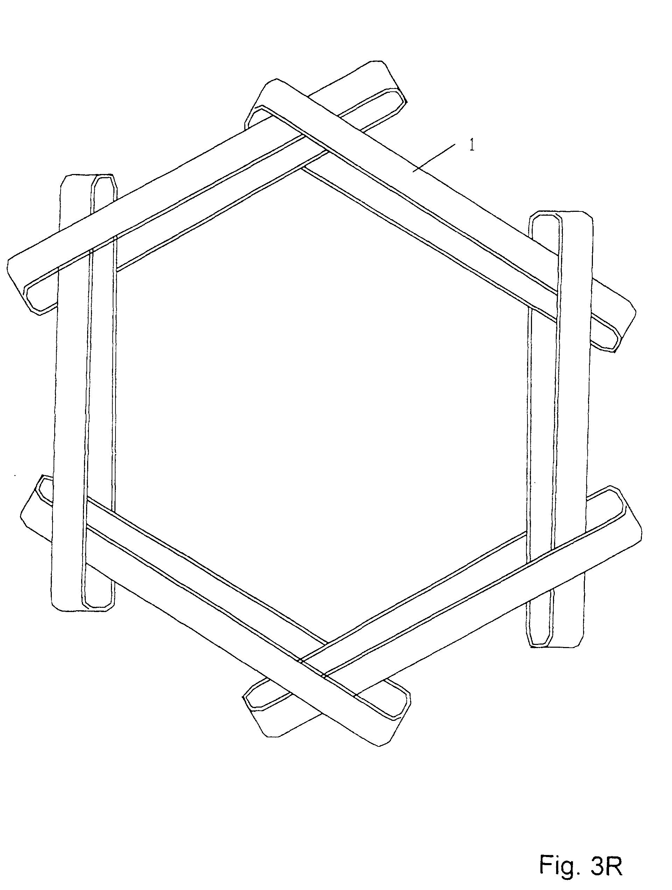

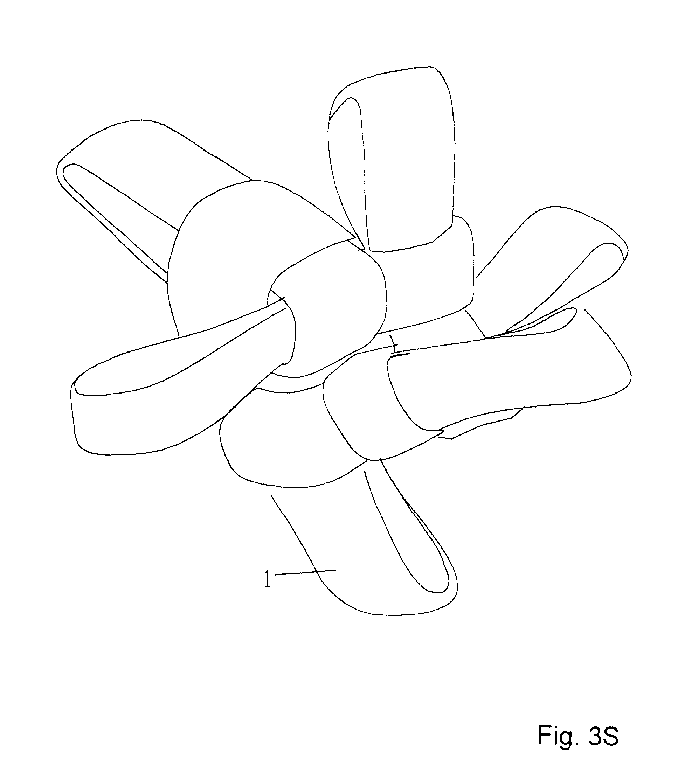

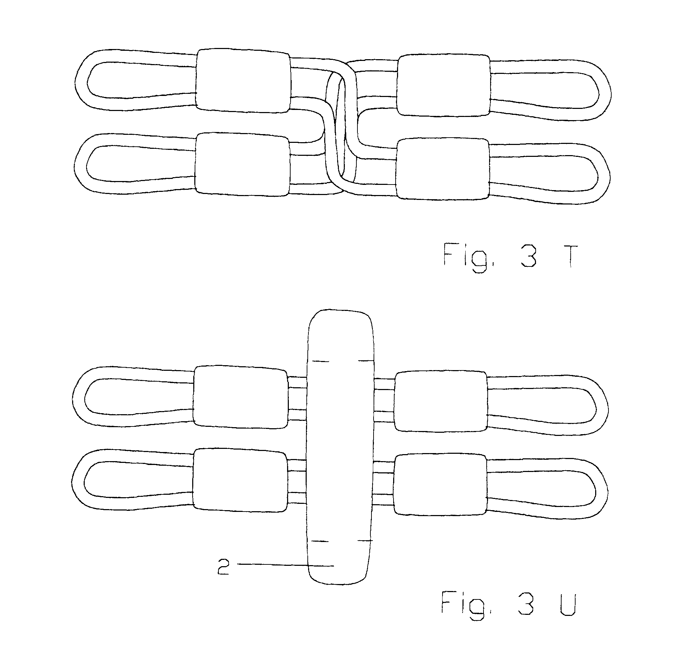

- Fig. 3P bis Fig. 3U: weitere Flechtvarianten zur Realisierung von Bausteinen für beispielsweise Stränge, Matten und Körper,

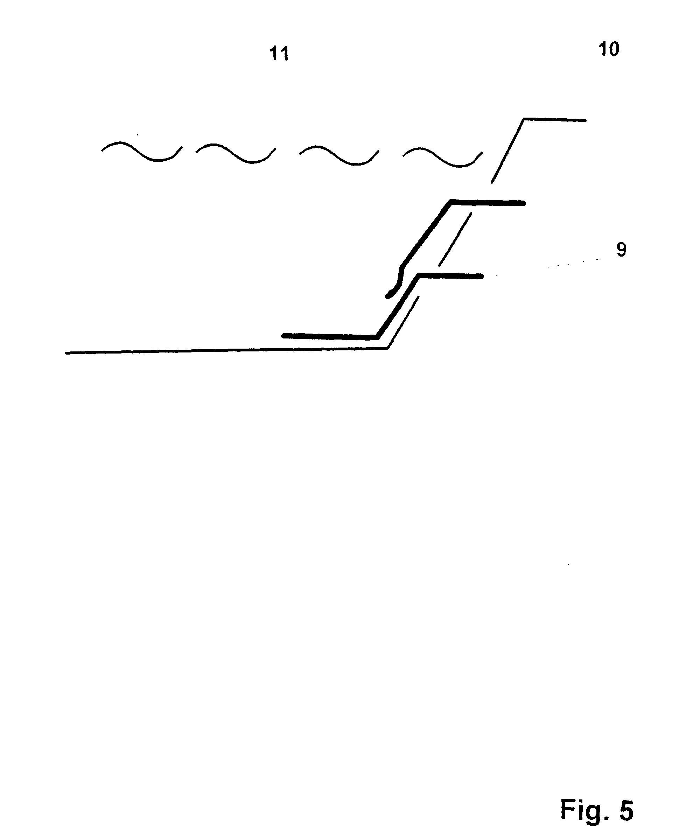

- Fig. 5: die Anordnung von Körpern zur Realisierung von Matten als Uferschutzmaßnahme

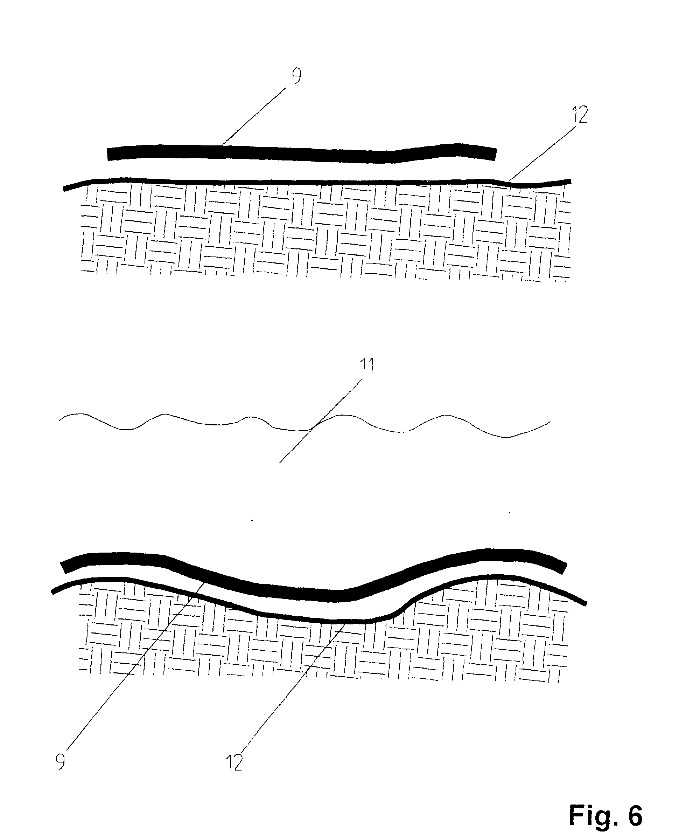

- Fig. 6: die Anordnung von Matten auf dem Gewässergrund,

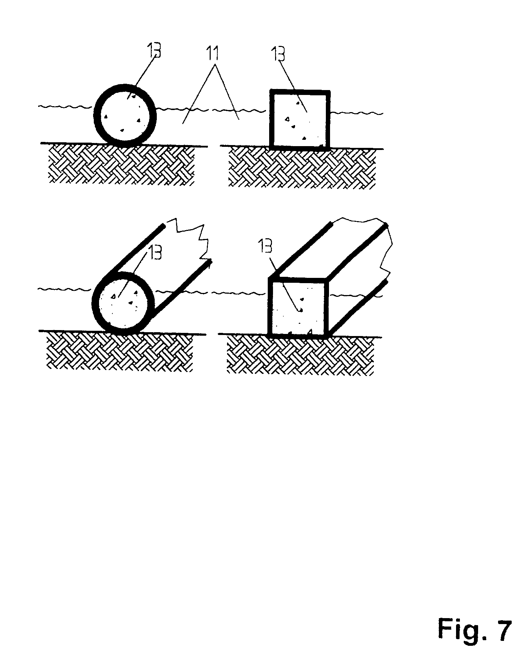

- Fig. 7: die Anordnung von mit Schüttgut gefüllten Hohlkörpern zur Realisierung künstlicher Dämme,

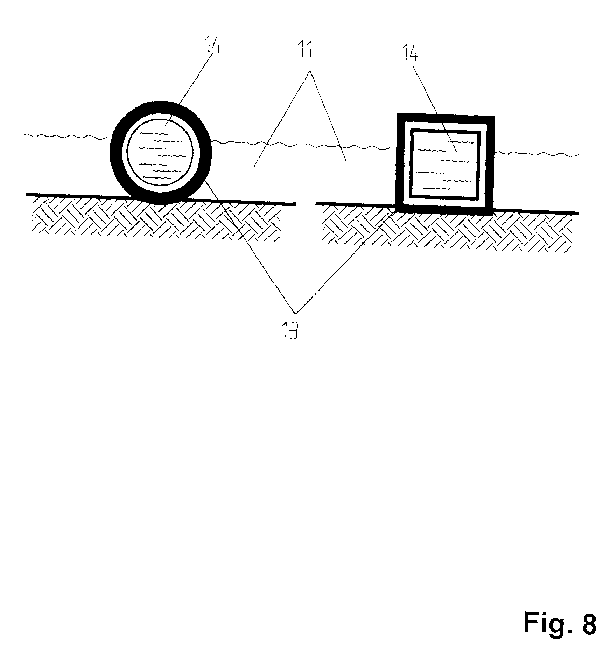

- Fig. 8: die Anordnung von Körpern zur Realisierung von mit Wasser gefüllten Hohlkörpern zur Realisierung künstlicher Dämme,

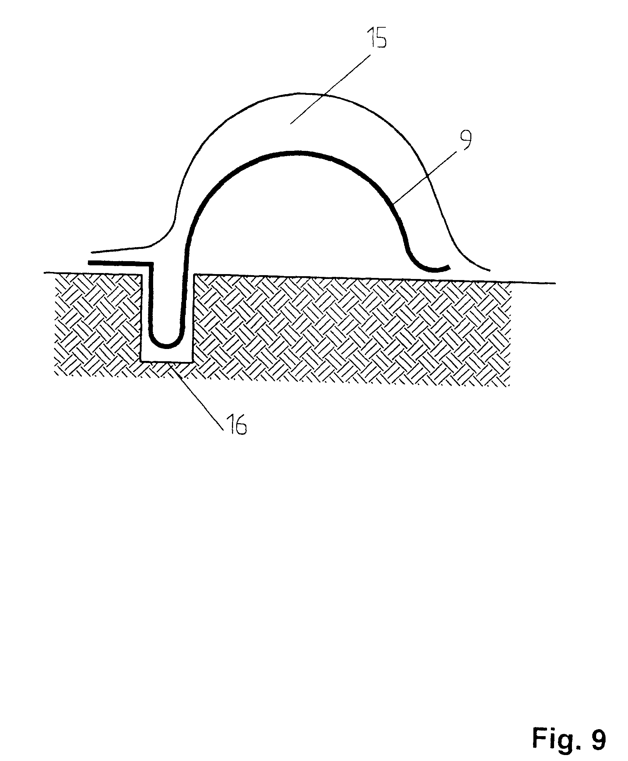

- Fig. 9: eine Dammauskleidung aus geflochtenen Matten,

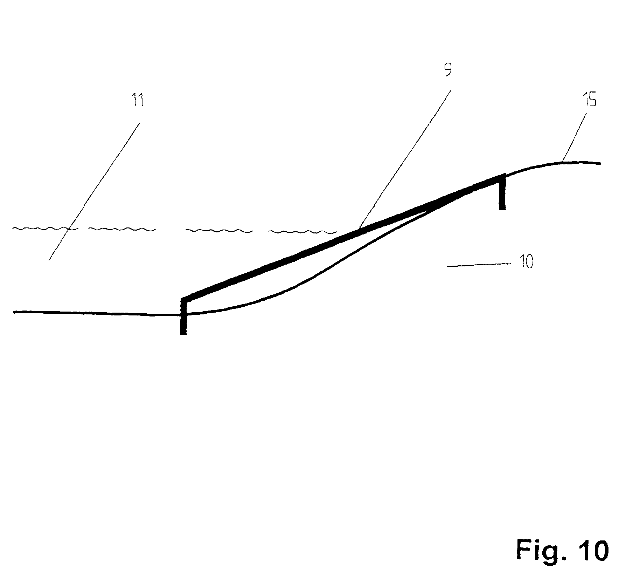

- Fig. 10: eine Uferbefestigung aus geflochtenen Matten,

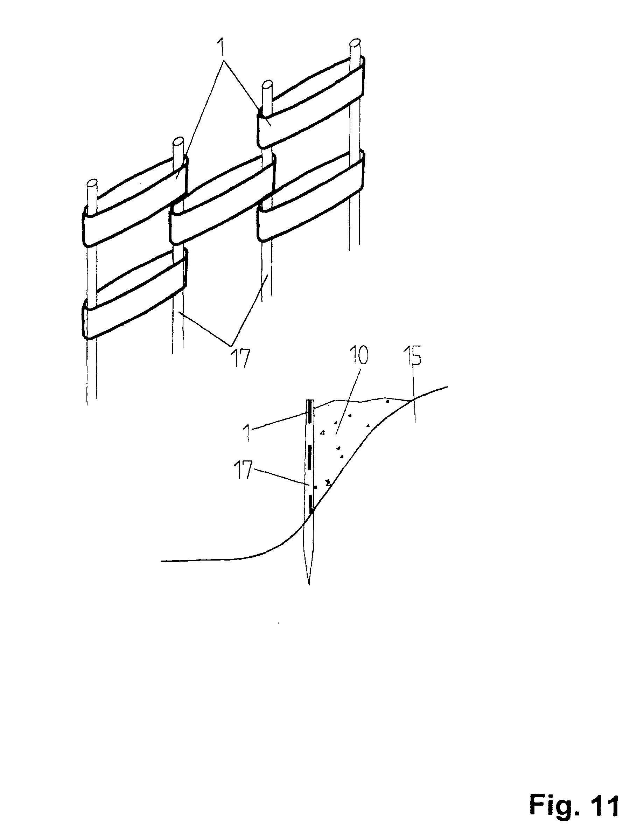

- Fig. 11: die Realisierung von Faschinen zum Uferschutz,

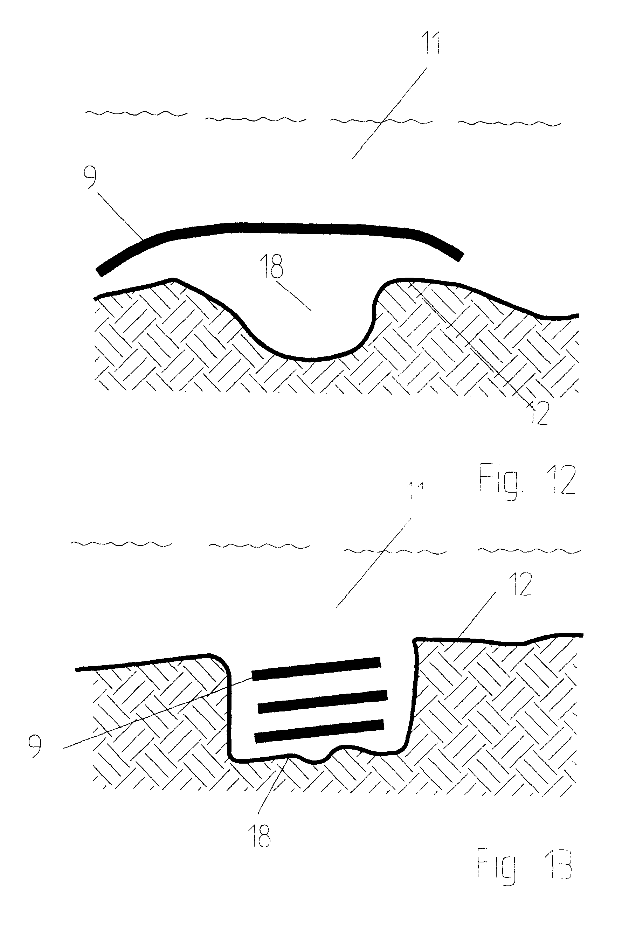

- Fig. 12: den Ausgleich von Unebenheiten am Gewässergrund durch Überdecken mit einer Matte,
- Fig. 13: den Ausgleich von Unebenheiten am Gewässergrund durch Ausfüllen mit Matten,

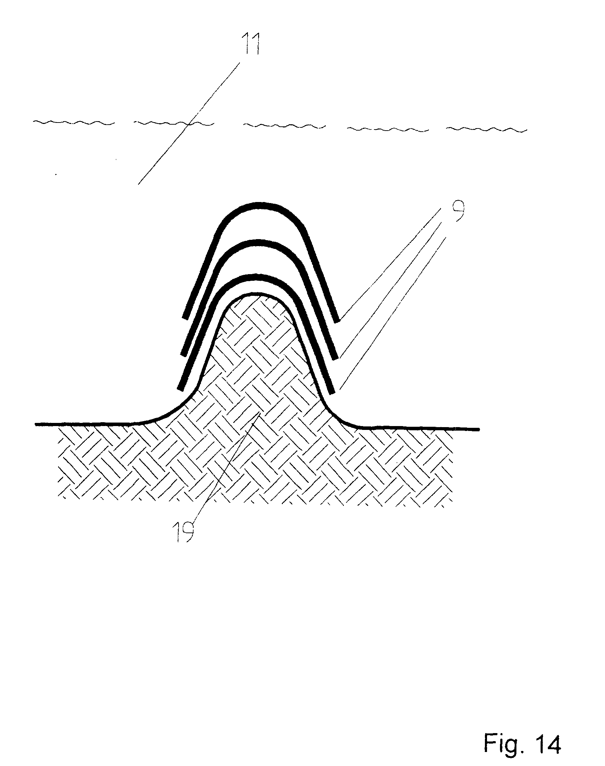

- Fig. 14: das Abdecken von Unterwasserriffen mit Matten,

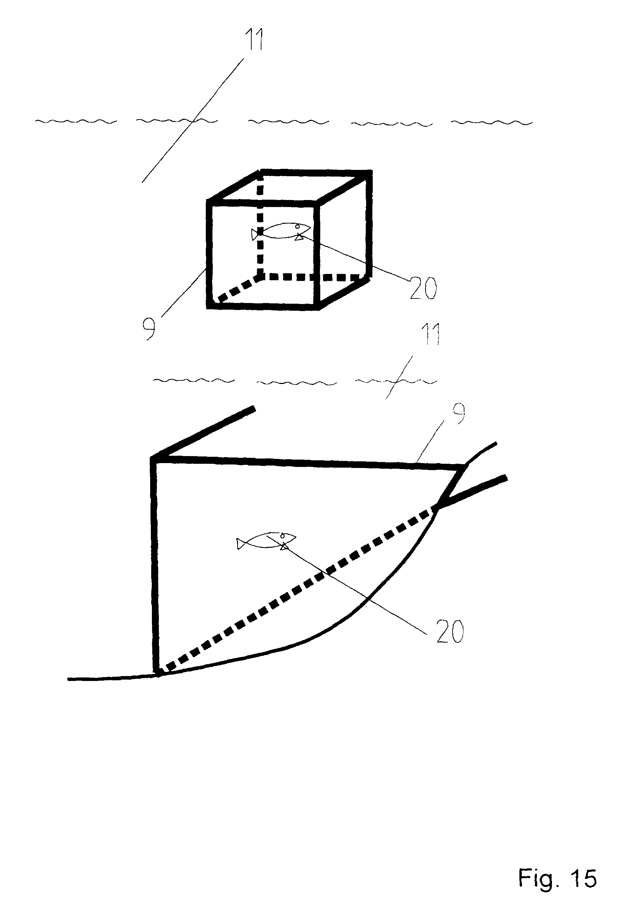

- Fig. 15: aus Matten realisierte abgegrenzte Räume zur Fischaufzucht,

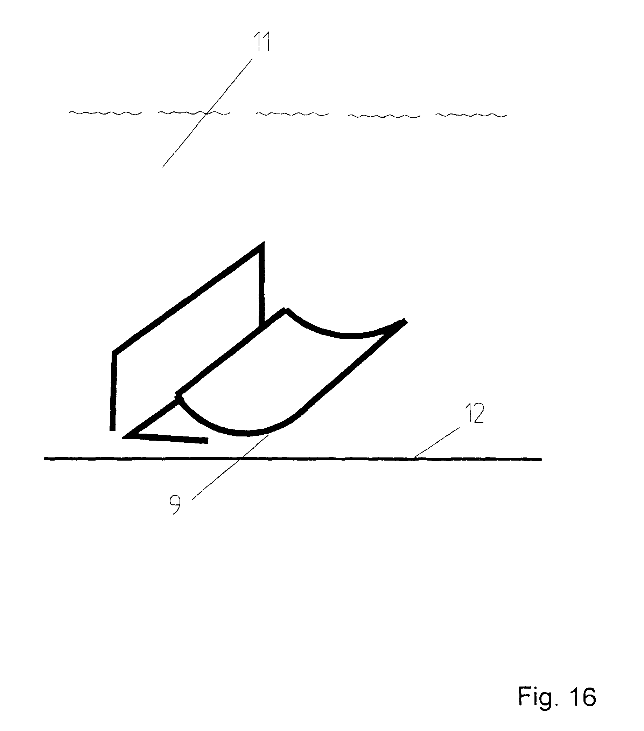

- Fig. 16: die Anordnung von Matten zum Schutz von Korallenbänken,

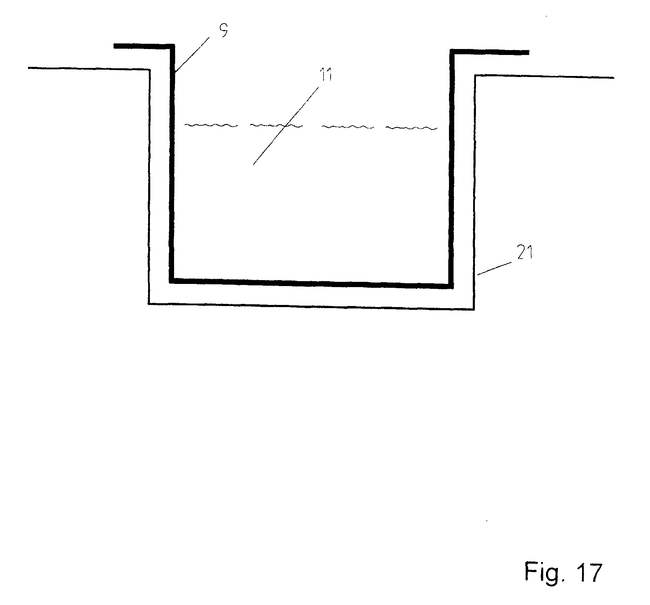

- Fig. 17: die Anordnung von Matten zum Schutz in Schleusenbecken,

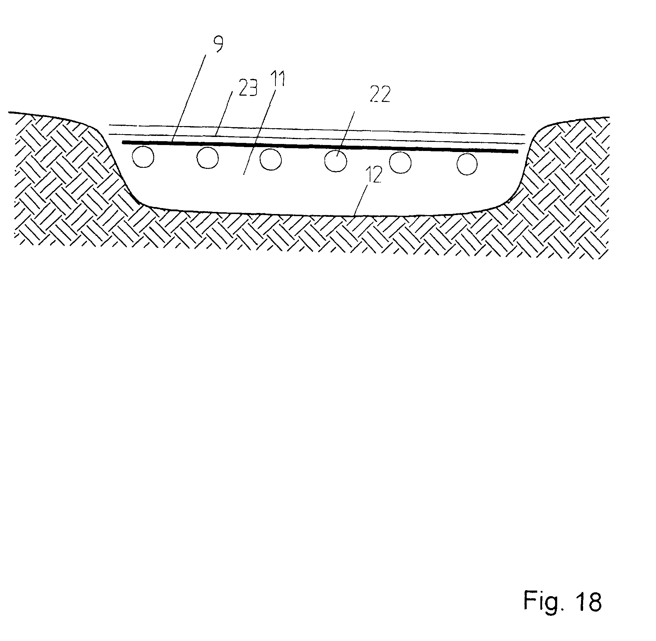

- Fig. 18: die Anordnung von Matten zum Schutz vor Eiseinbruch,

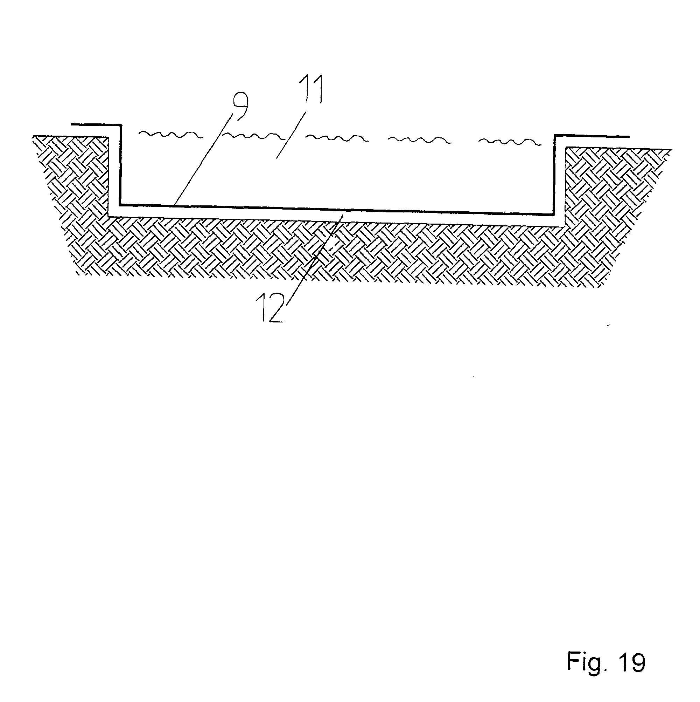

- Fig. 19: die Anordnung von Matten in Teichen,

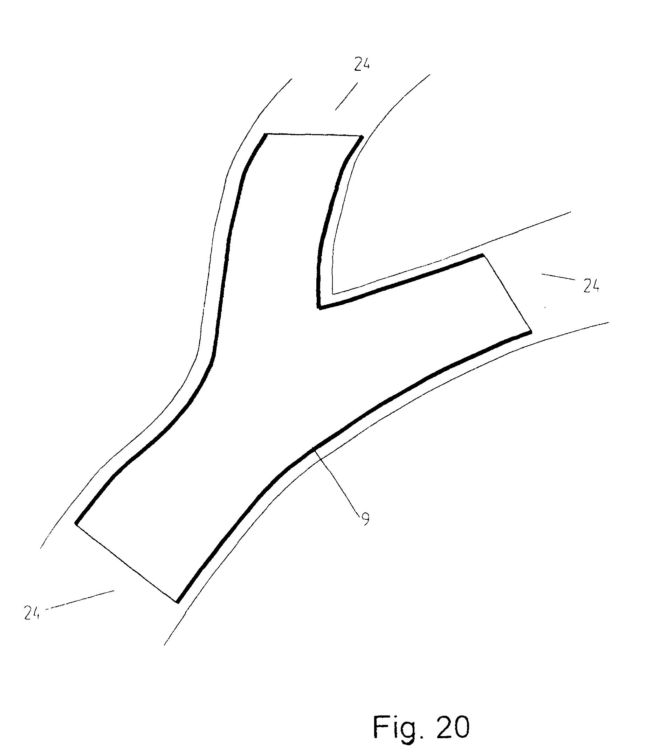

- Fig. 20: die Anordnung von Matten in Flüssen,

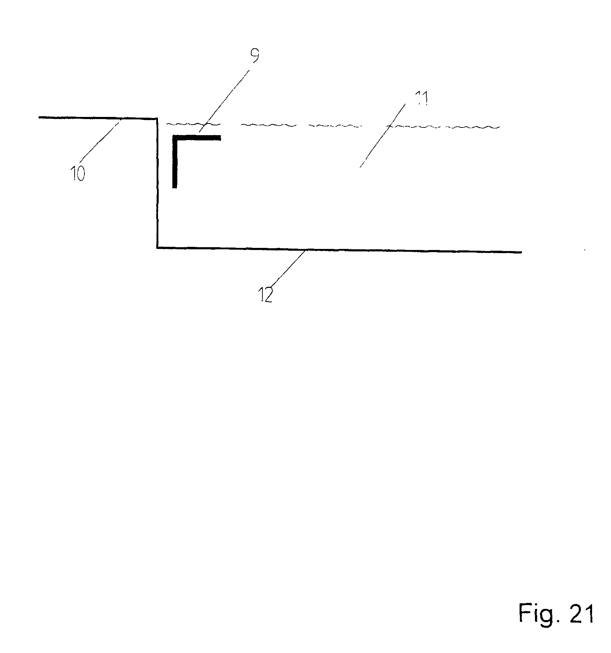

- Fig. 21: die Anordnung von Matten als Wellenabsorber,

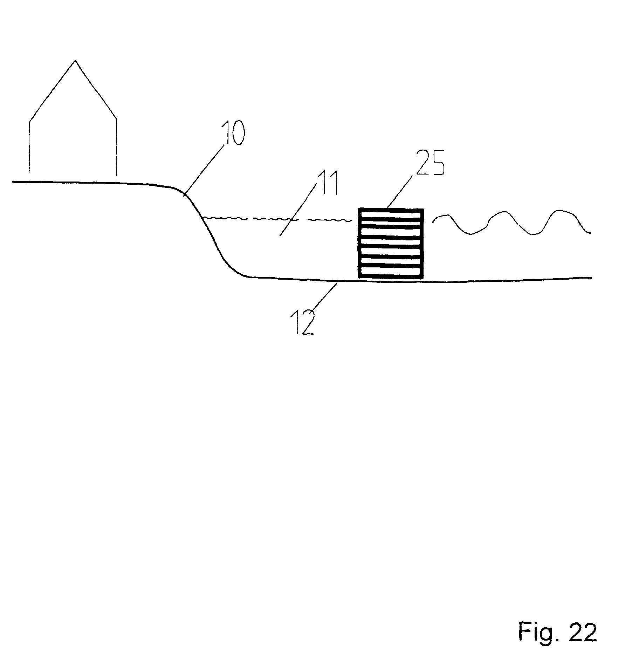

- Fig. 22: die Anordnung von Flechtkörpern als Wellenbrecher,

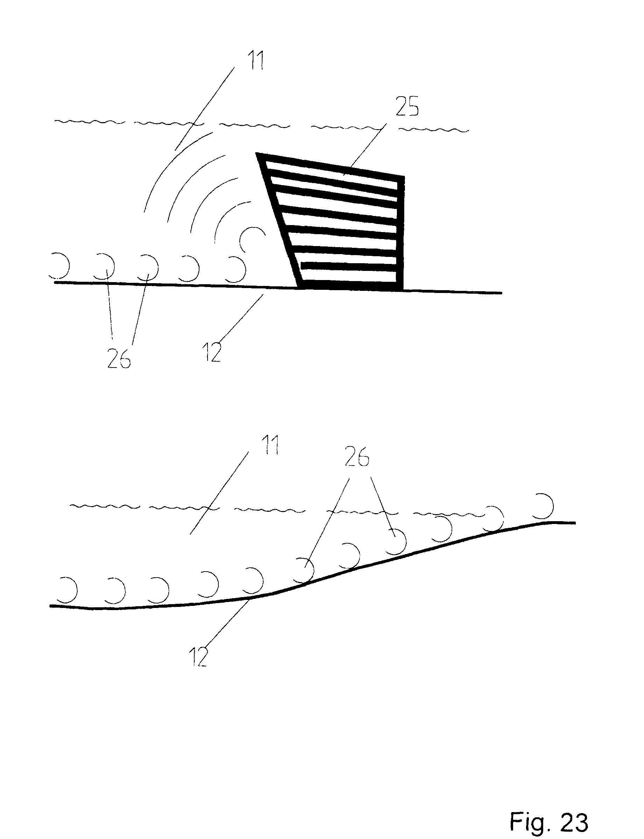

- Fig. 23: die Anordnung von Flechtkörpern als Unterwasserwellenabsorber,

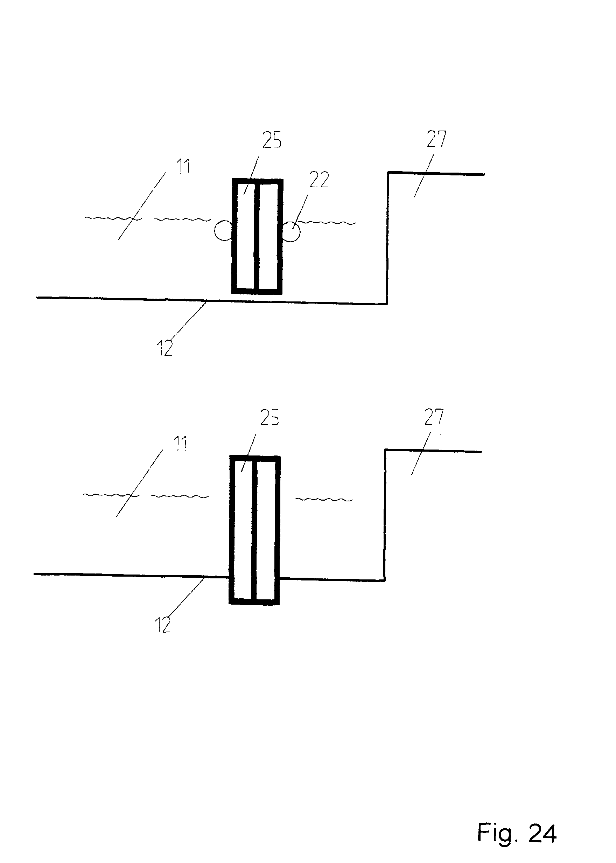

- Fig. 24: die Anordnung von Flechtkörpern zum Schutz von Kaianlagen,

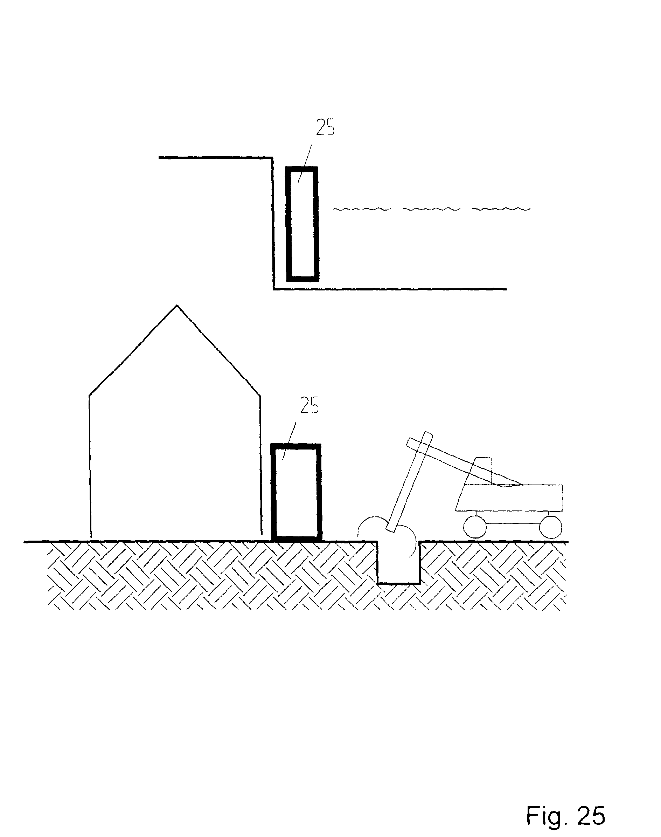

- Fig. 25: die Anordnung von Flechtkörpern zum Schutz von Bauwerken,

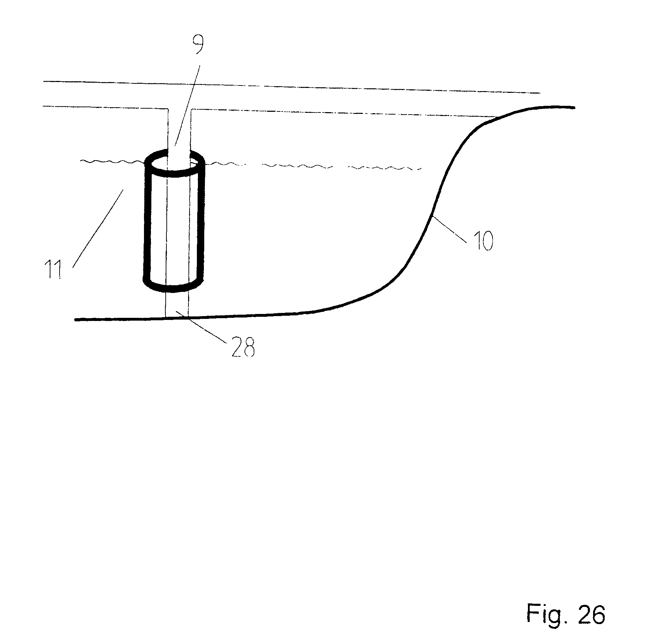

- Fig. 26: die Anordnung von Flechtkörpern oder Matten zum Schutz von Brückenpfeilern,

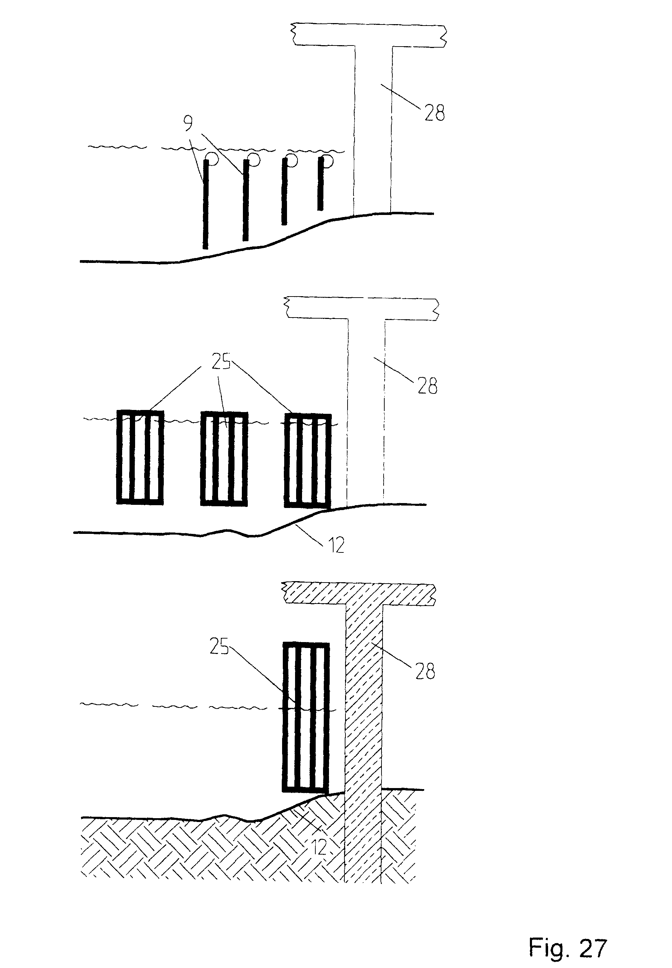

- Fig. 27: die Anordnung von Flechtkörpern oder Matten zum Schutz von Brückenpfeilern und ähnlichen Bauwerken,

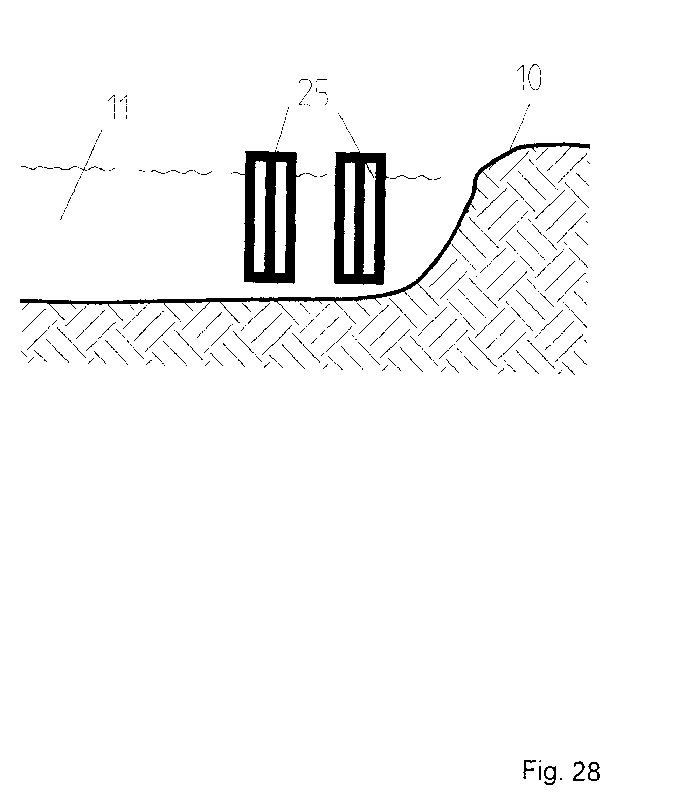

- Fig. 28: die Anordnung von Flechtkörpern zum Schutz gegen Eisgang,

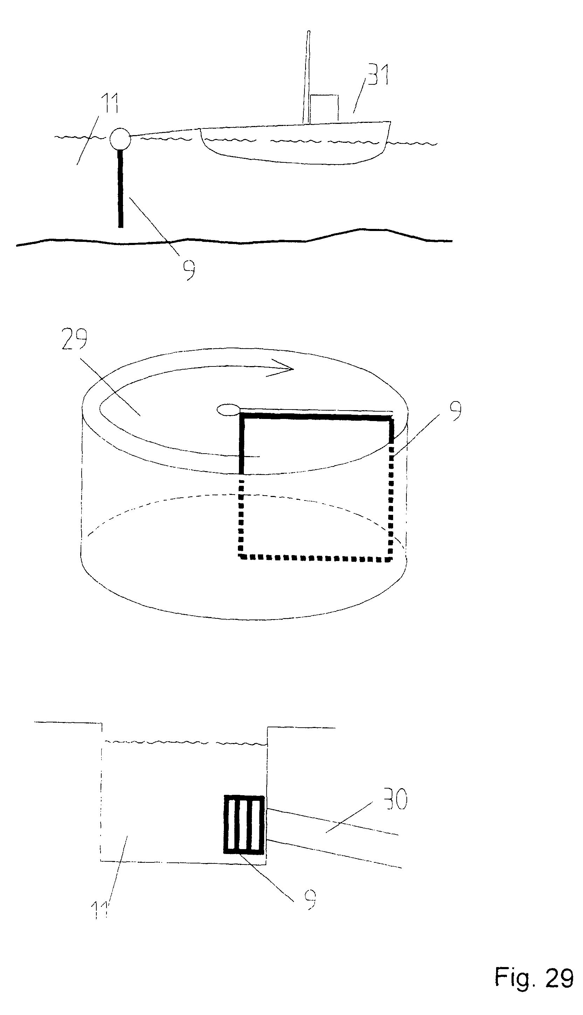

- Fig. 29: den Einsatz von Matten oder Flechtkörpern als Filter,

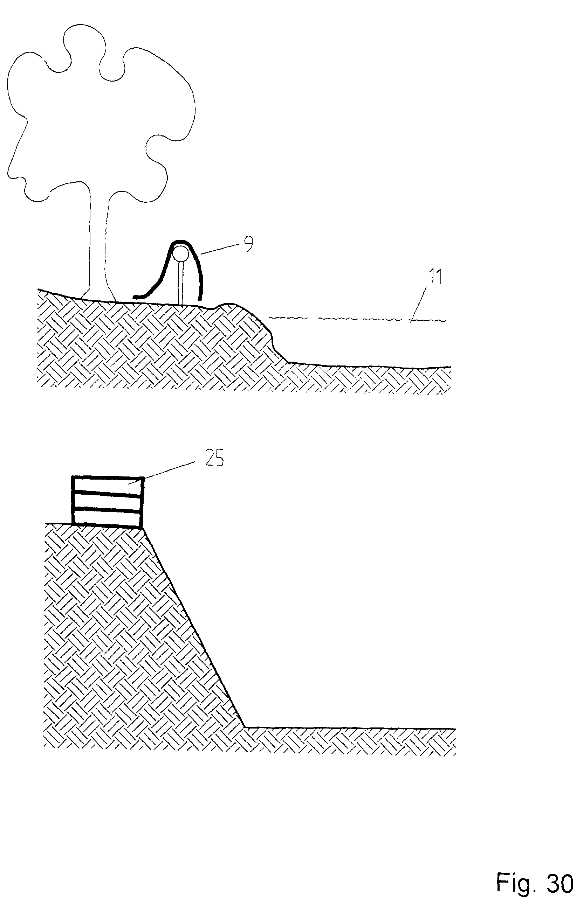

- Fig. 30: den Einsatz von Matten oder Flechtkörpern als Absturzschutz,

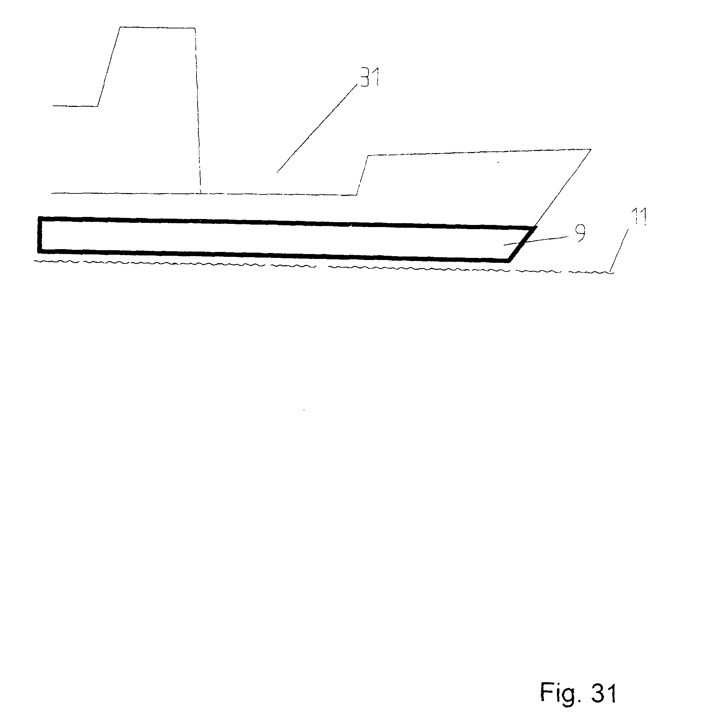

- Fig. 31: den Einsatz von Matten oder Flechtkörpern als Schutz der Schiffsaußenhaut,

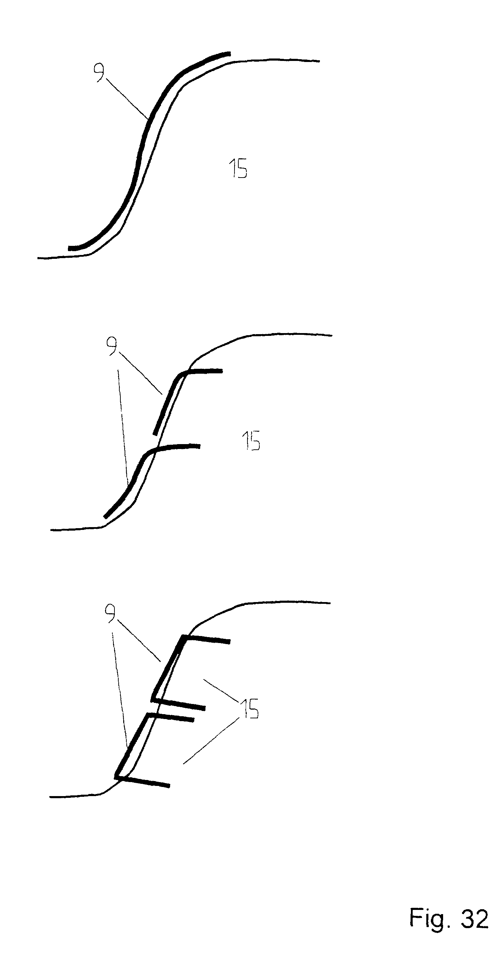

- Fig. 32: den Einsatz von Matten zur Erdbefestigung,

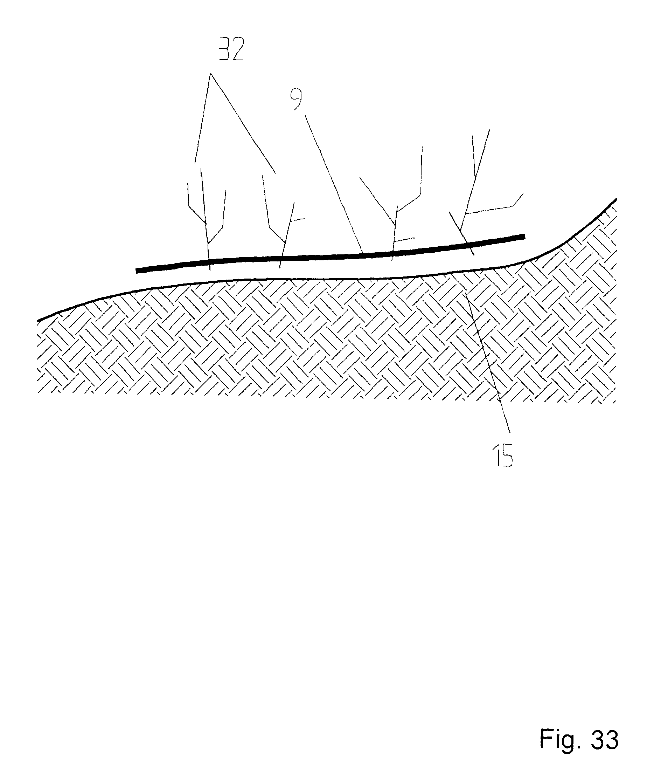

- Fig. 33: den Einsatz von Matten als Pflanzenschutz,

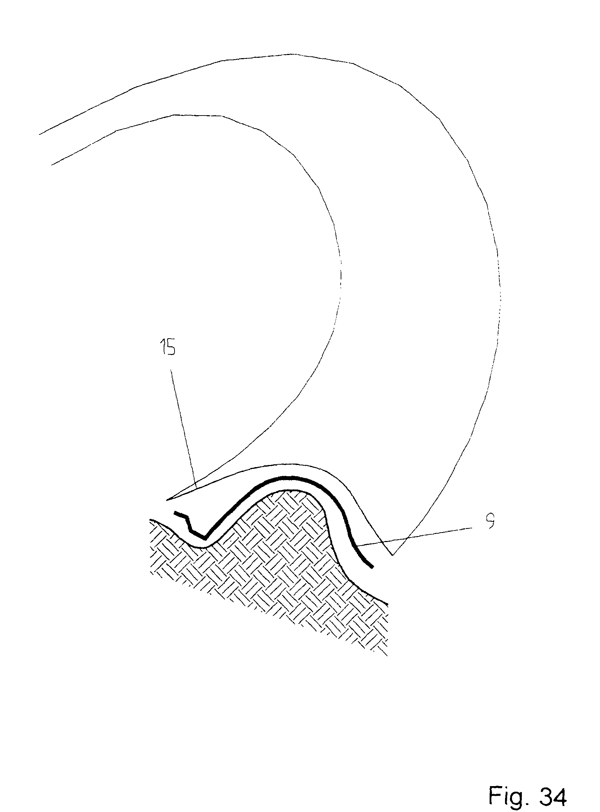

- Fig. 34: den Einsatz von Matten zur Realisierung von Dämmen für Speicherbecken,

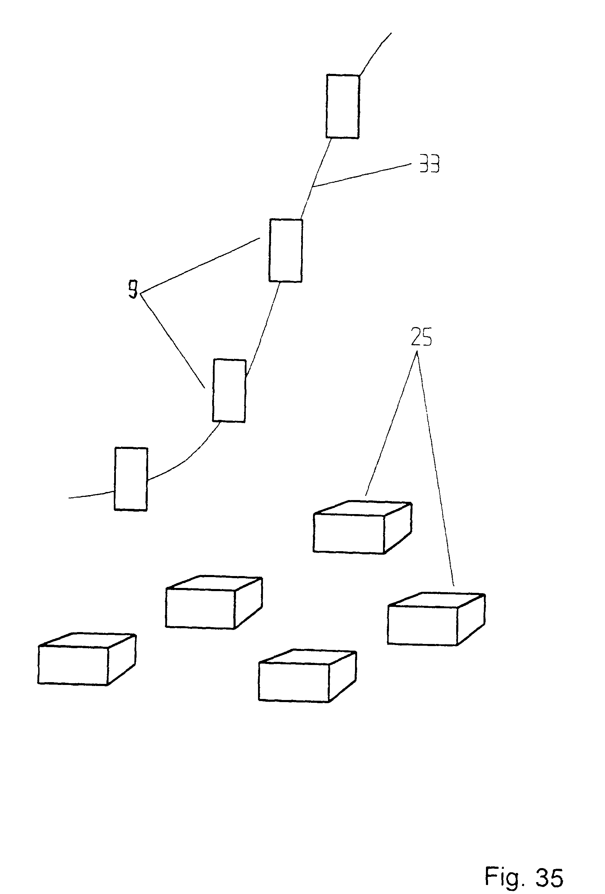

- Fig. 35: den Einsatz von Matten oder Körpern als Lawinenschutz,

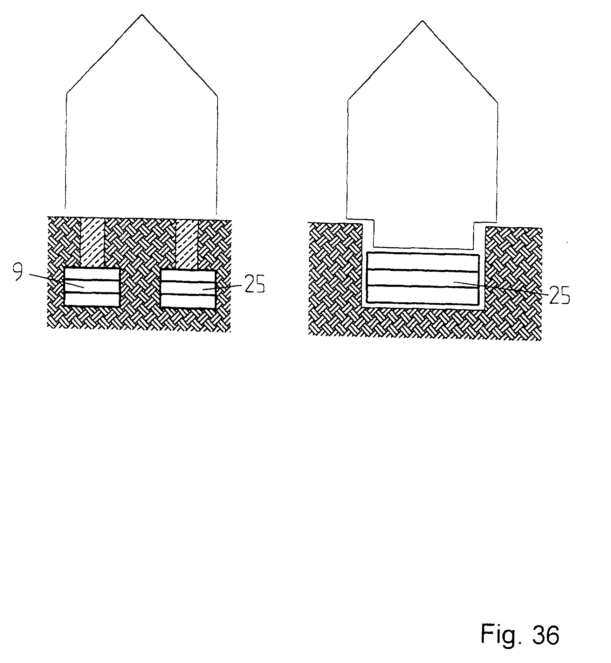

- Fig. 36: den Einsatz von Matten oder Körpern in Fundamenten,

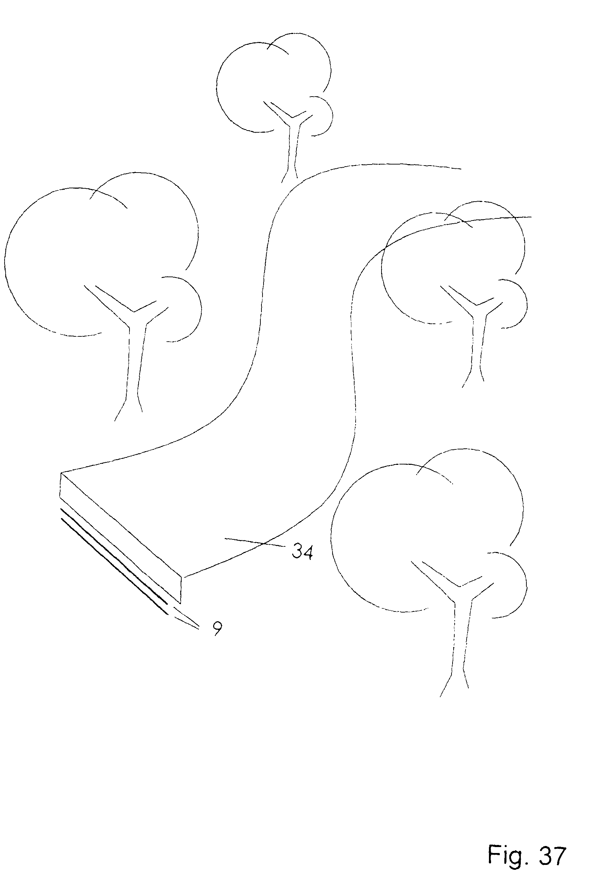

- Fig. 37: den Einsatz von Matten zur Realisierung von Dämmen für Speicherbecken oder Körpern als Straßenuntergrund,

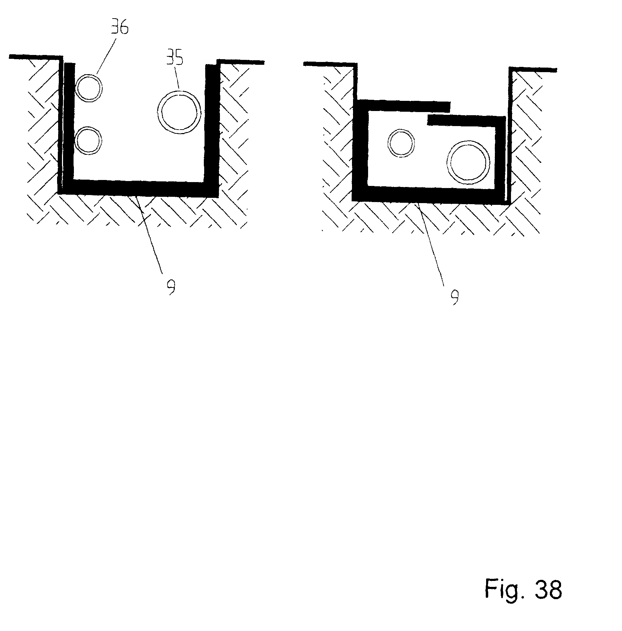

- Fig. 38: den Einsatz von Matten als Rohr- bzw. Kabelschacht,

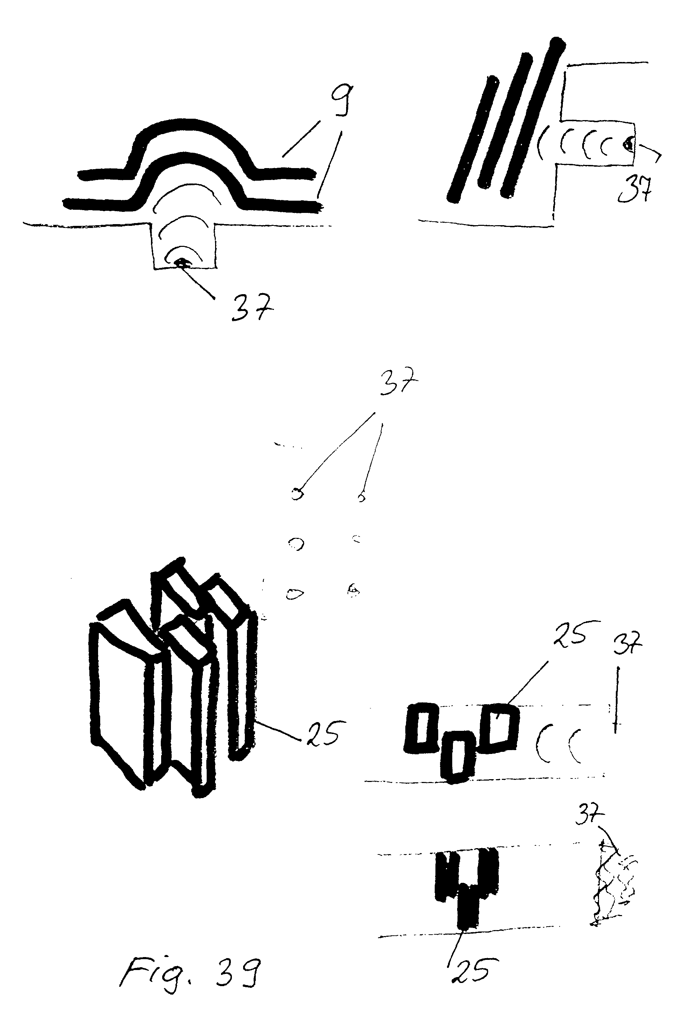

- Fig. 39: den Einsatz von Matten oder Körpern als Schutzelemente bei Sprengungen,

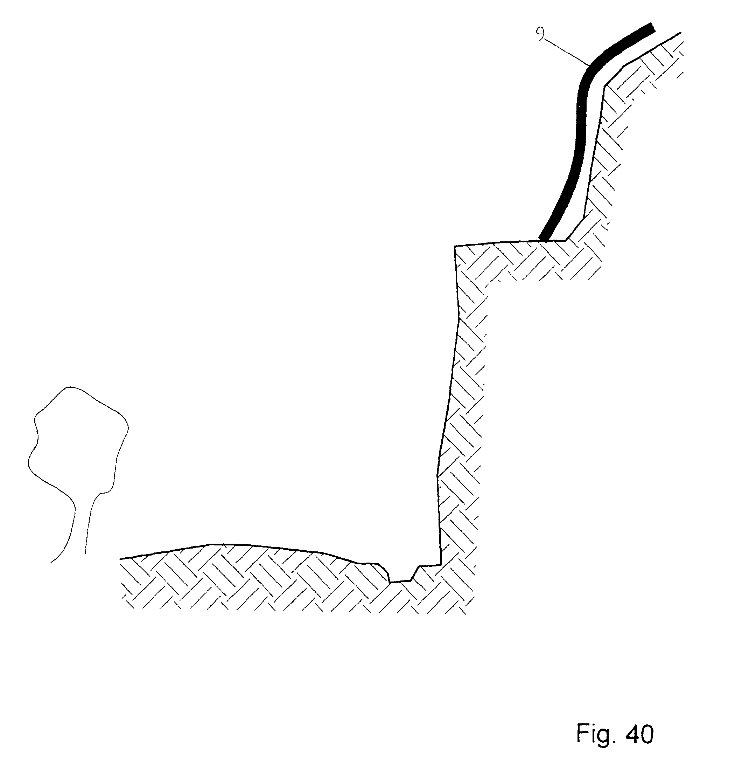

- Fig. 40: den Einsatz von Matten zur Verhinderung von Steinschlag,

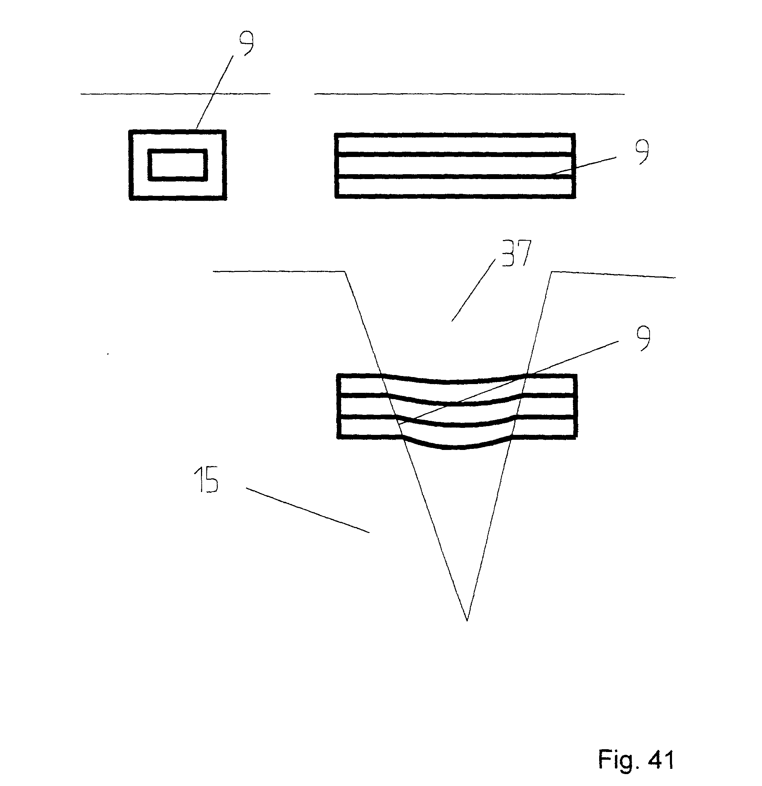

- Fig. 41: den Einsatz von Matten oder Körpern zur Realisierung von Schutzbauten in Erdbebengebieten,

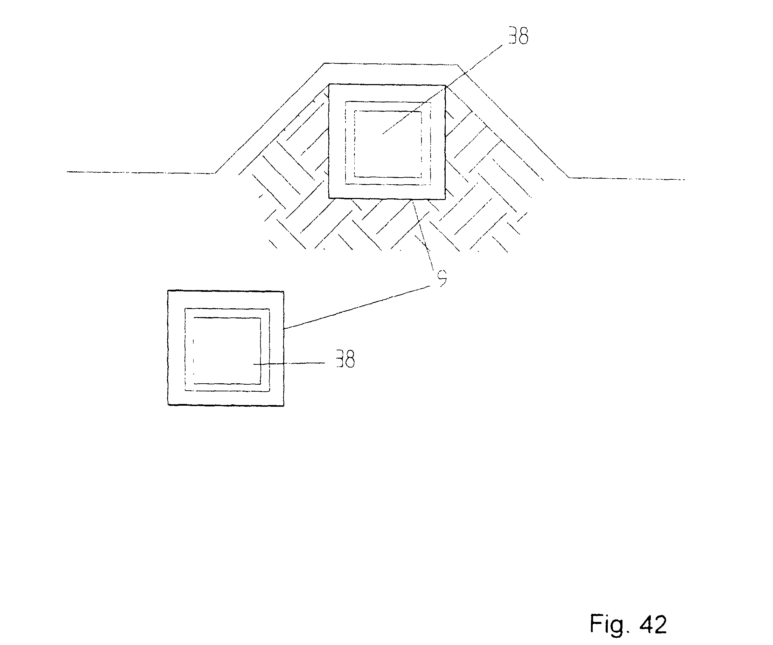

- Fig. 42: den Einsatz von Matten zum Schutz von Bunkerbauwerken,

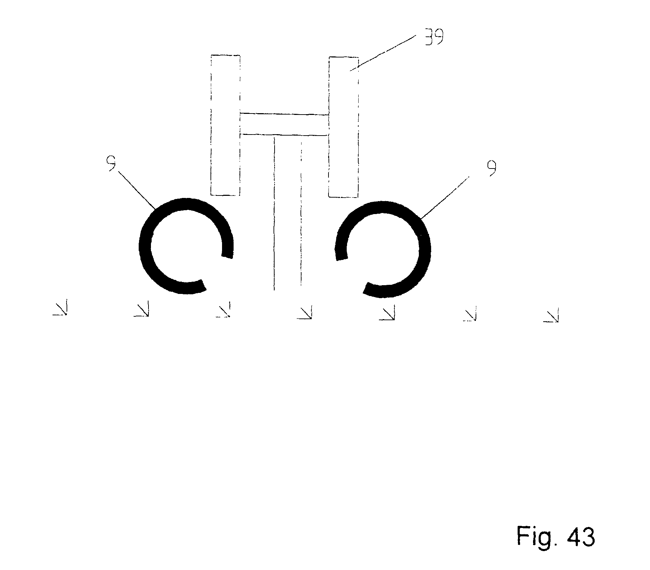

- Fig. 43: den Einsatz von Matten in Verbindung mit Leitplanken,

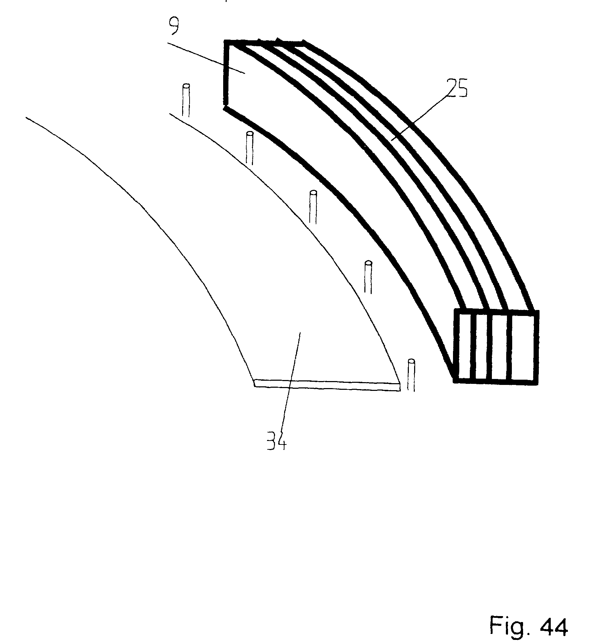

- Fig. 44: den Einsatz von Matten als Verkehrrsleitelement und Aufprallschutz im Straßenverkehr,

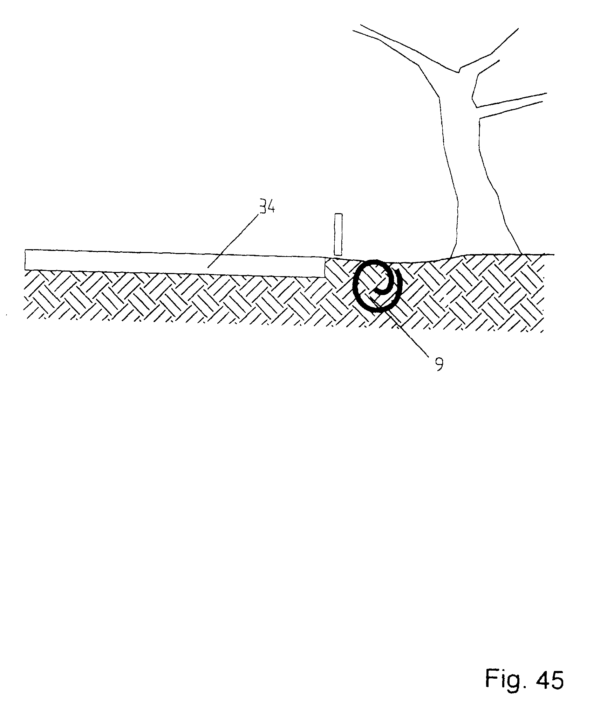

- Fig. 45: den Einsatz von Matten als Drainage,

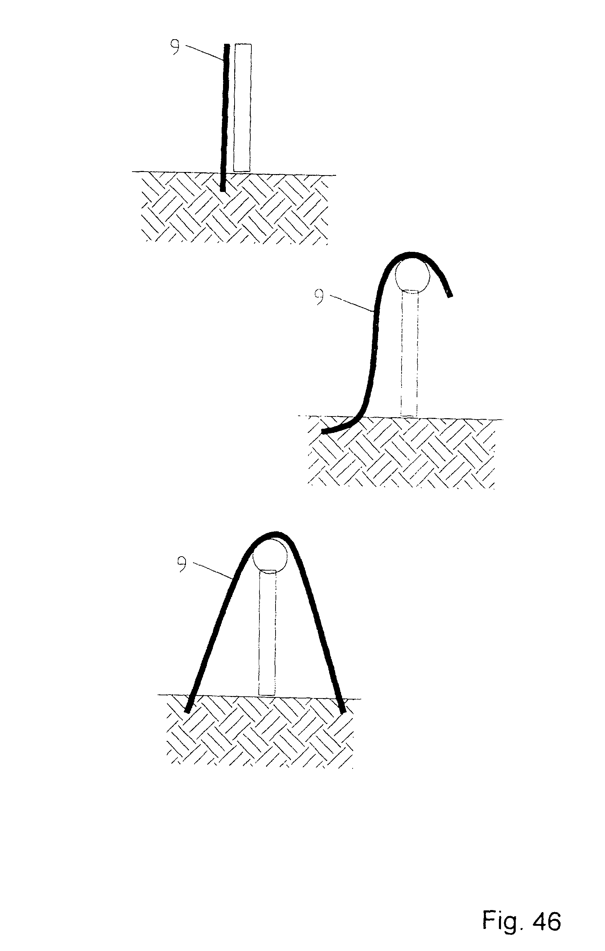

- Fig. 46: den Einsatz von Matten als Zaun,

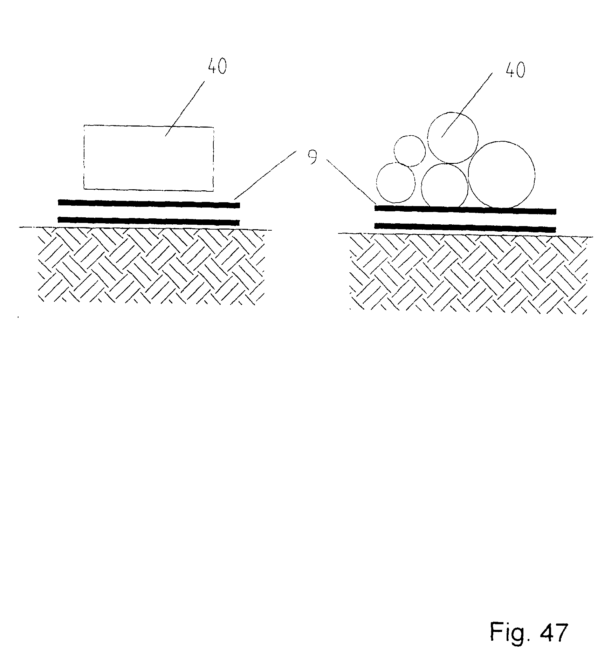

- Fig. 47: den Einsatz von Matten als Lastverteilerelement,

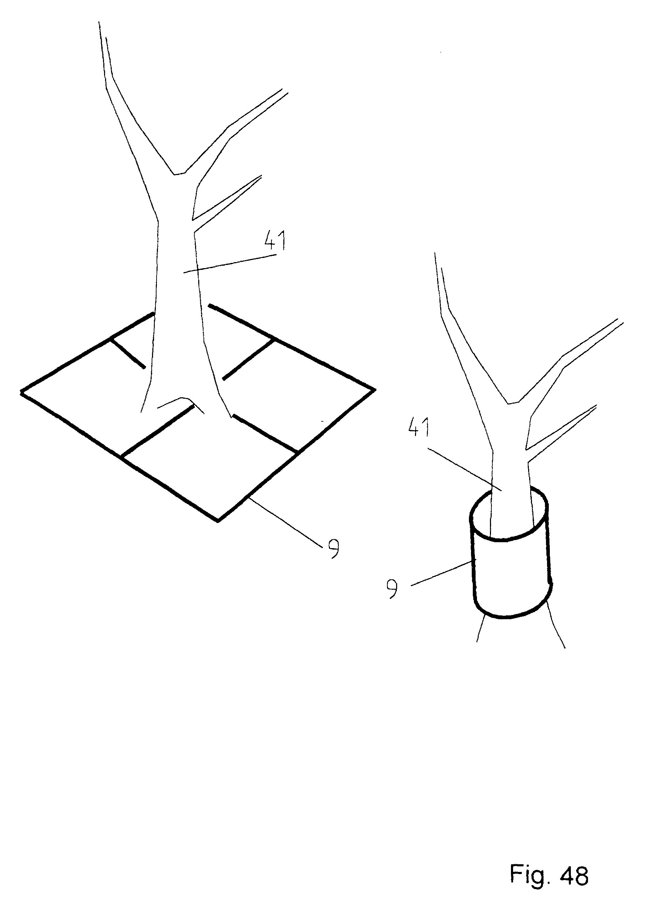

- Fig. 48: den Einsatz von Matten als Baumschutz,

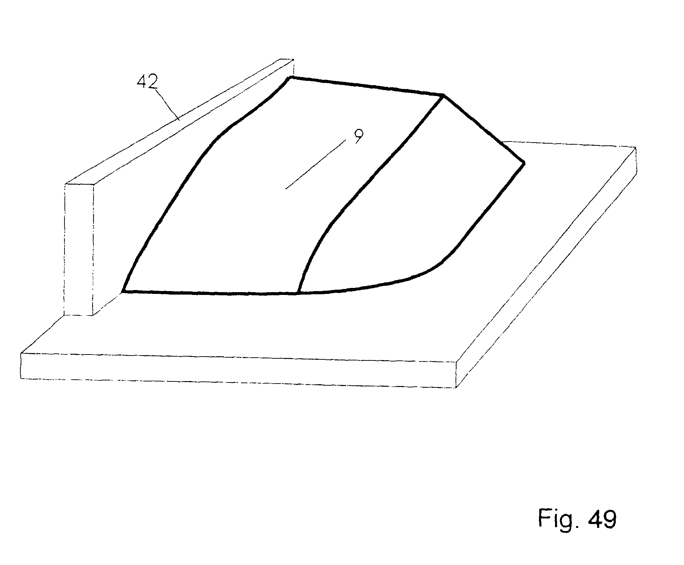

- Fig. 49: den Einsatz von Matten als Silageabdeckung,

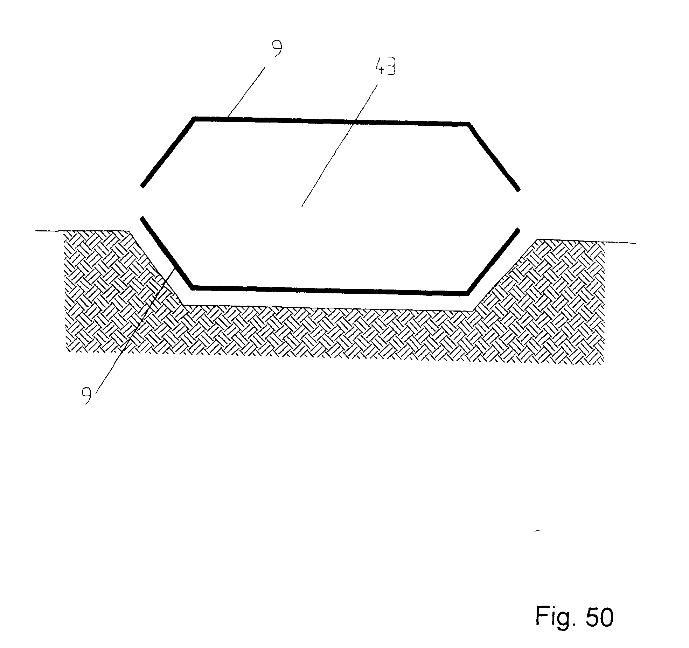

- Fig. 50: den Einsatz von Matten als Deponiebegrenzung,

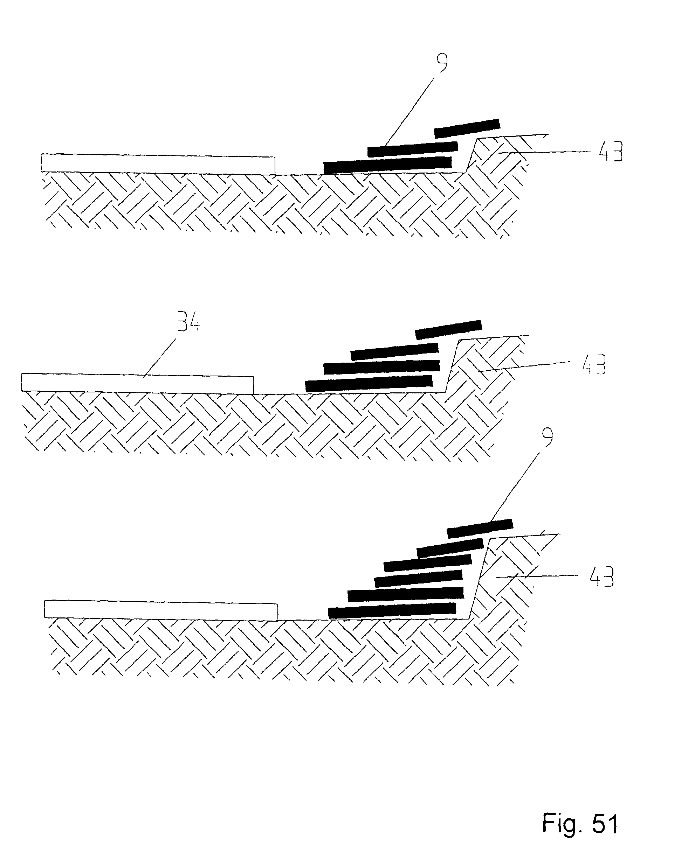

- Fig. 51: den Einsatz von Matten zur Realisierung sich erhöhender Einfahrten,

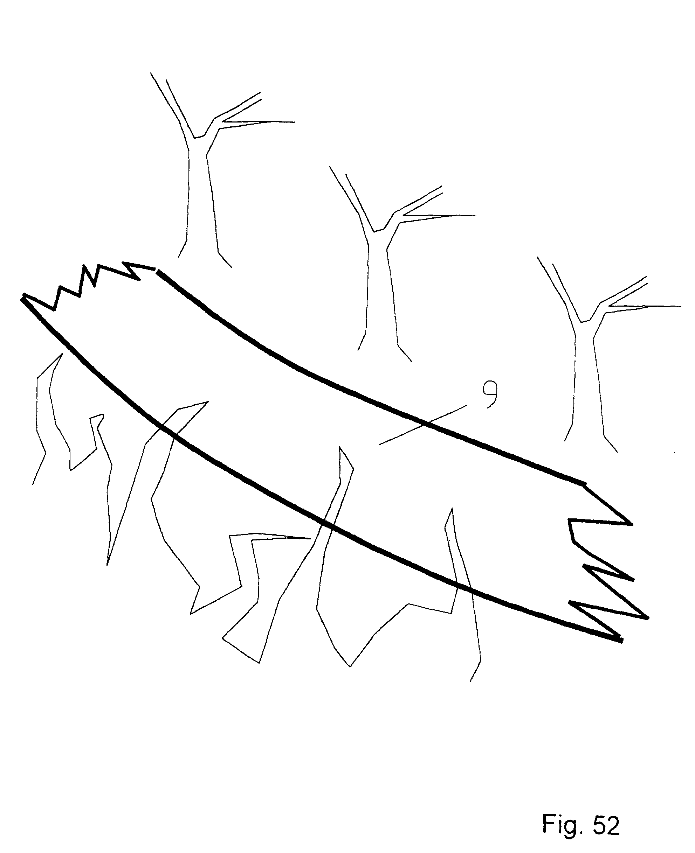

- Fig. 52: den Einsatz von Matten als Brandmatte für Gegenfeuer,

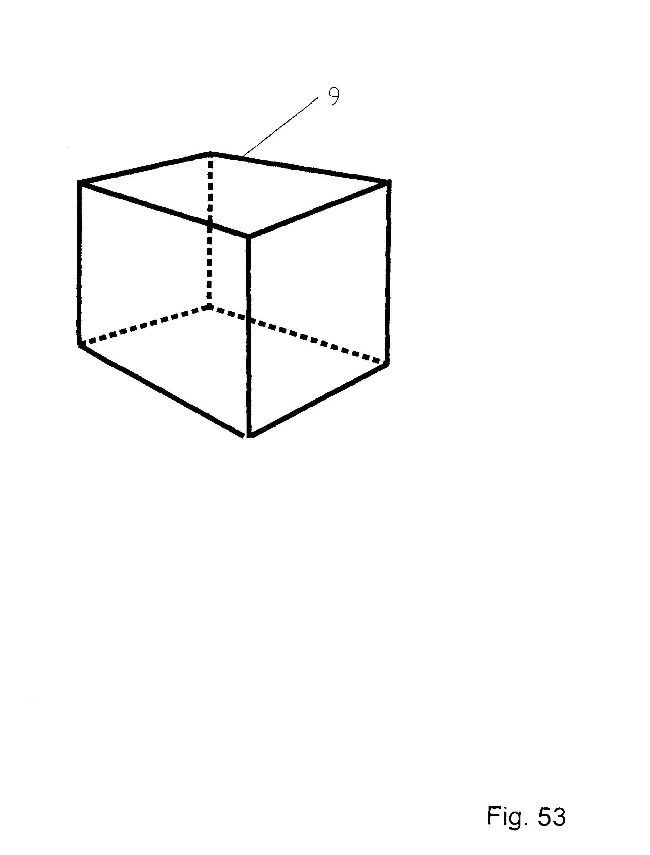

- Fig. 53: den Einsatz von Matten zur Realisierung von Blitzschutz und Unterstellmöglichkeiten,

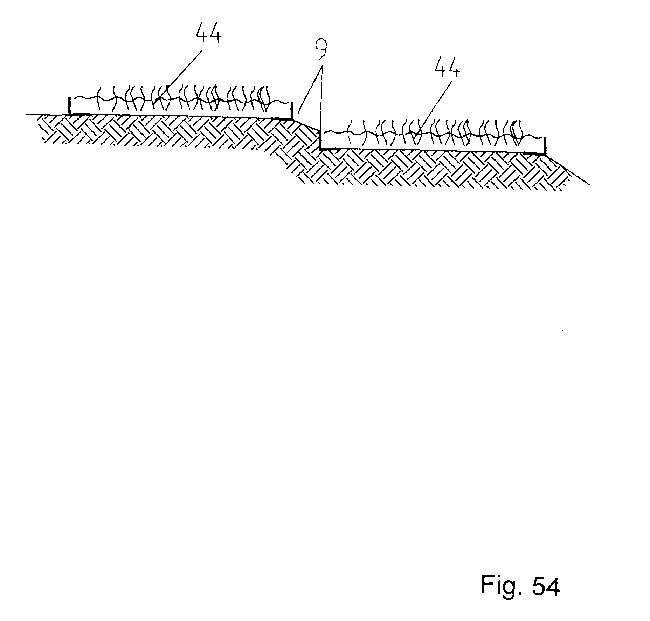

- Fig. 54: den Einsatz von Matten zum Anlegen von Reisfeldern,

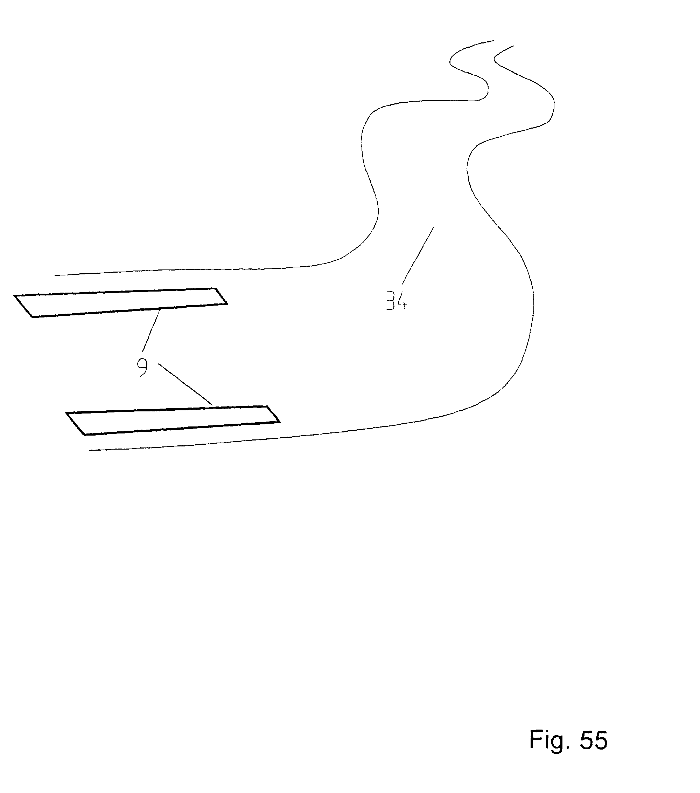

- Fig. 55: den Einsatz von Matten zur Fahrbahnmarkierung,

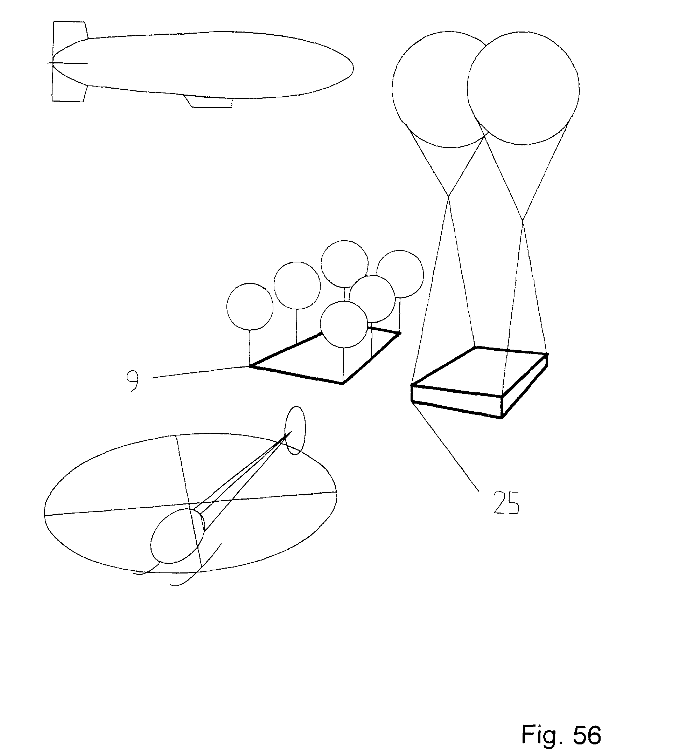

- Fig. 56: Transportmöglichkeiten für die Matten bzw. Körper,

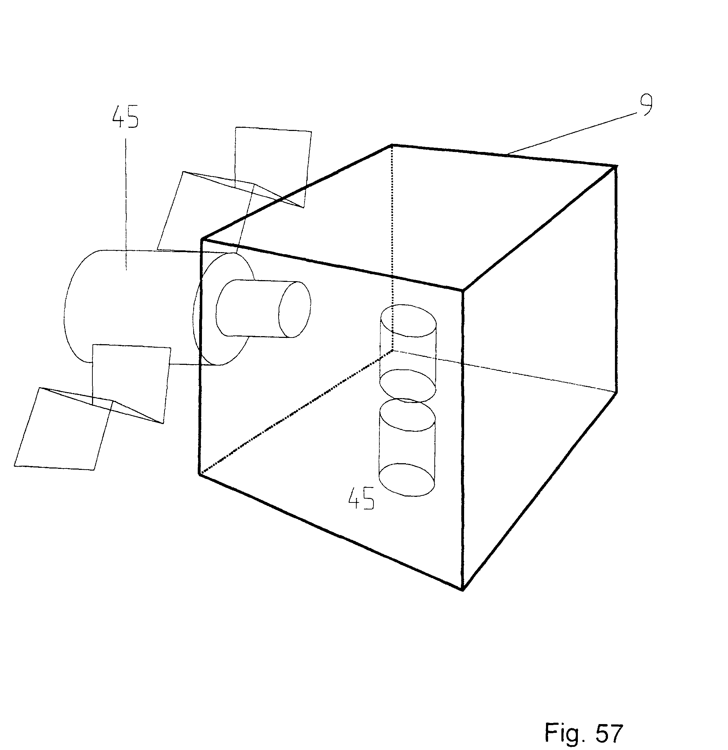

- Fig. 57: den Einsatz von Matten zur Realisierung von Sicherheitskäfigen im Weltraum.

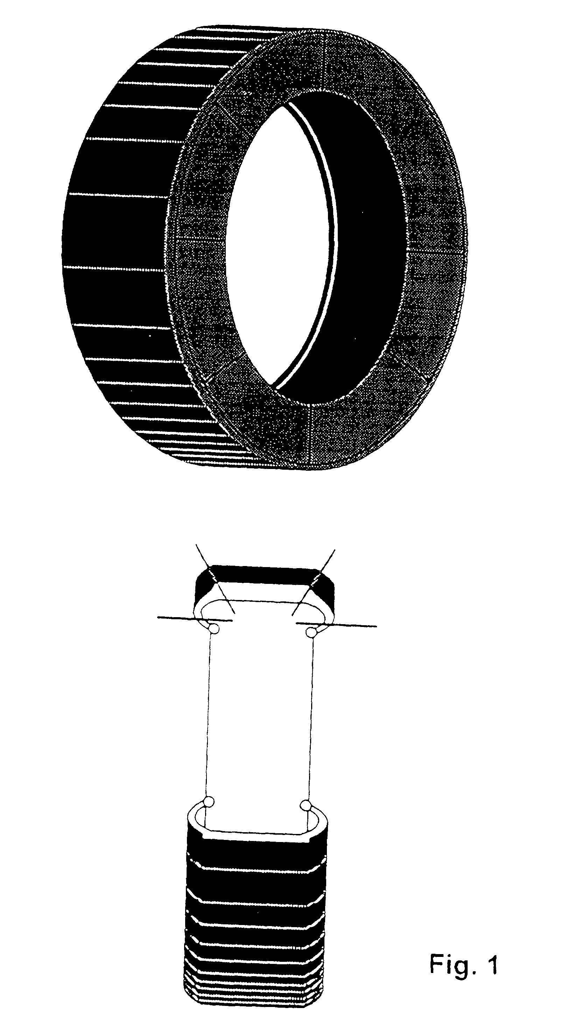

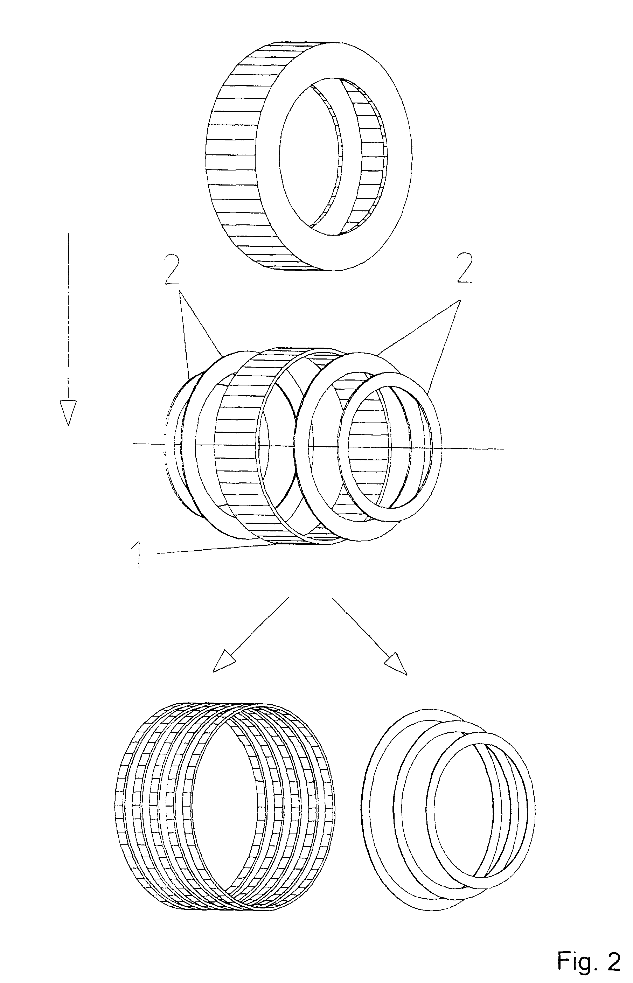

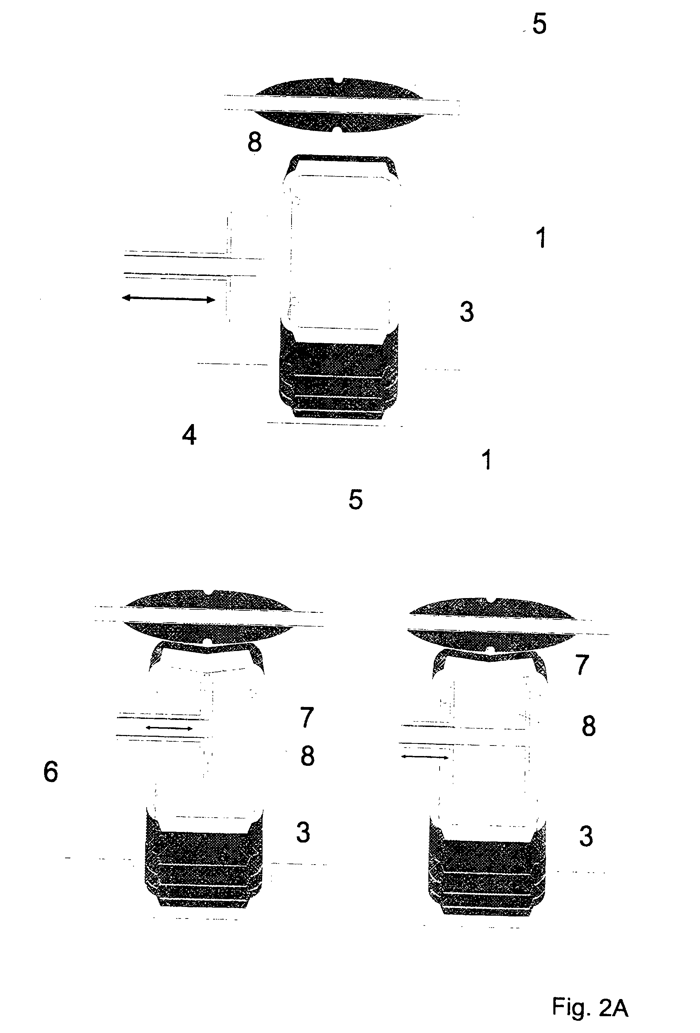

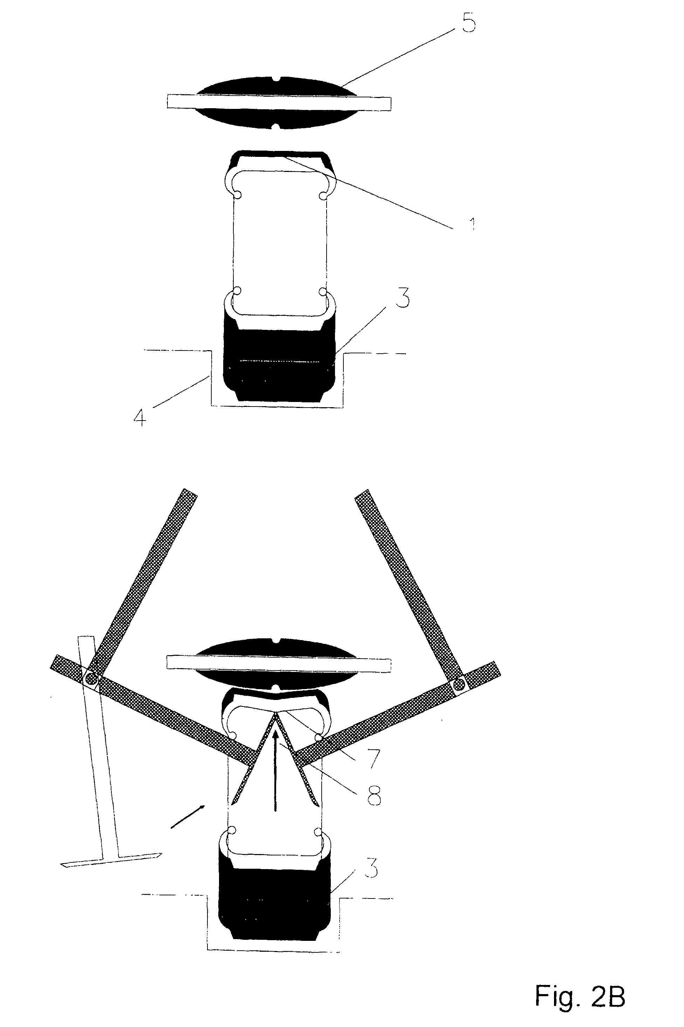

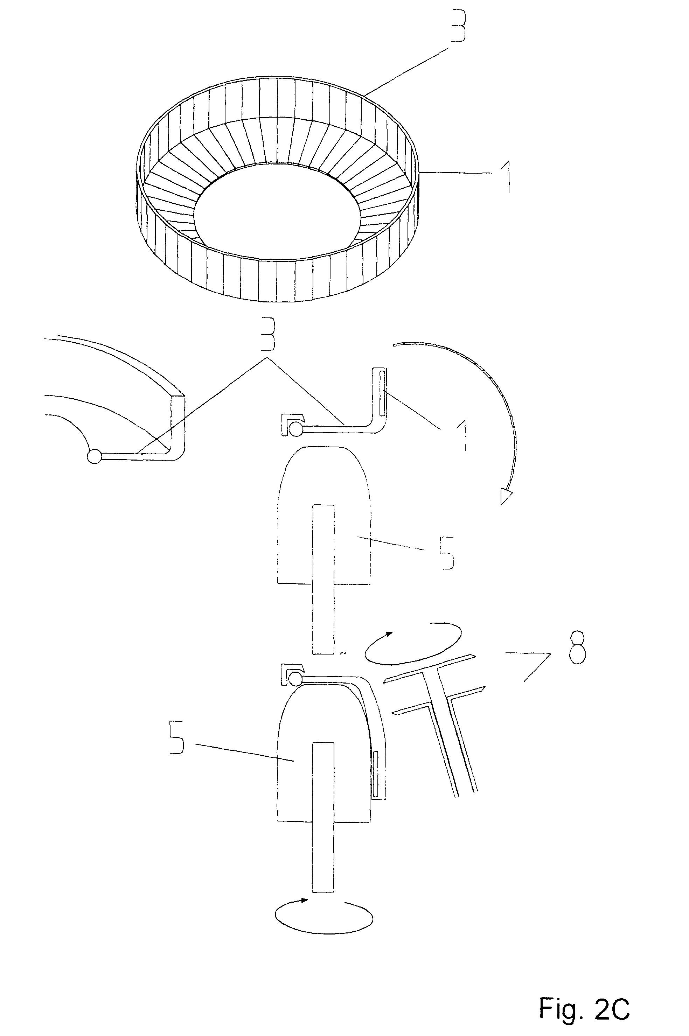

Wie in Fig. 1 dargestellt, wird ein Reifen derart geschnitten, daß ein Laufflächenring 1 und zwei Seitenringe 2 entstehen. Der Laufflächenring 1 und die Seitenringe 2 sind in Fig. 2 dargestellt.

Der Laufflächenring 1 kann durch weitere Schnitte in schmalere Ringe zerlegt werden, ebenso die Seitenringe 2.

Die Herstellung von Flächengebilden bzw. Körpern erfolgt durch Zusammenführung von Ringen per Hand oder mittels Handhabungsmanipulatoren oder Griffelementen. Das Verbindung der Ringe von Hand erfolgt derart, daß man einen Ring ergreift und diesen so zusammendrückt, daß links und rechts gleichgroße Schlaufen bzw. Öffnungen entstehen.
Das Durchführen eines weiteren Ringes durch die beiden Schlaufen oder Öffnungen im zusammengefalteten Zustand ermöglicht das Ergreifen der Schlaufen des zweiten Ringes. Durch Arretieren des Anfangsringes ist ein Öffnen zu verhindern, so daß durch die entstandenen Schlaufen ein neuer Ring eingeführt werden kann. Unterstützt wird dieses Flechten durch Vorrichtungen, die das entstandene Geflecht von der Anlage so ableiten, daß ein kontinuierlicher Produktionsprozeß in der Flechtanlage stattfinden kann.

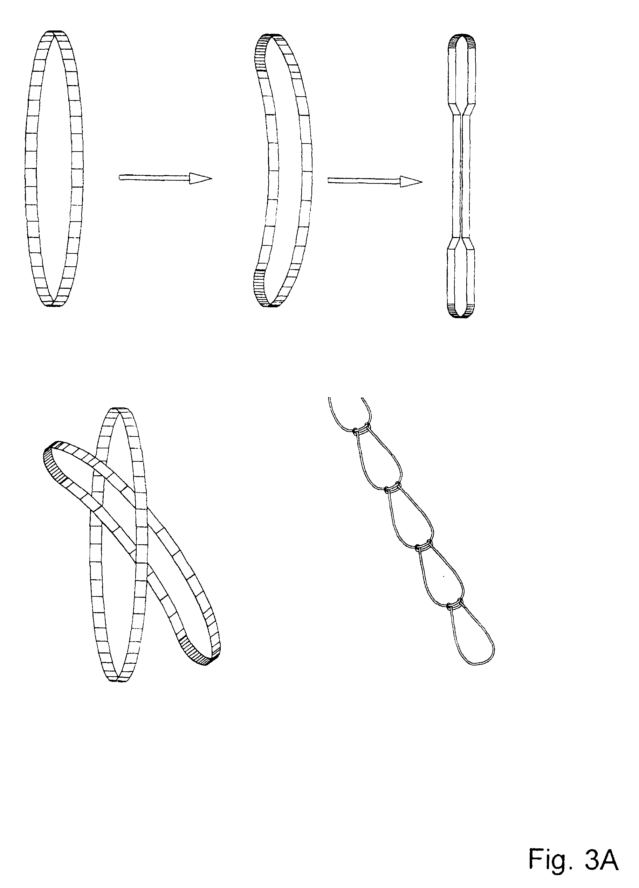

In Fig. 3A bis 3H sind einige Ausführungsformen von durch Flechten entstandenen Flächengebilden und Körpern gezeigt. Sehr effektiv gefertigte Flächengebilde sind Matten, welche beispielsweise zur Verstärkung von Deichen gegen Hochwassereinflüsse anwendbar sind.

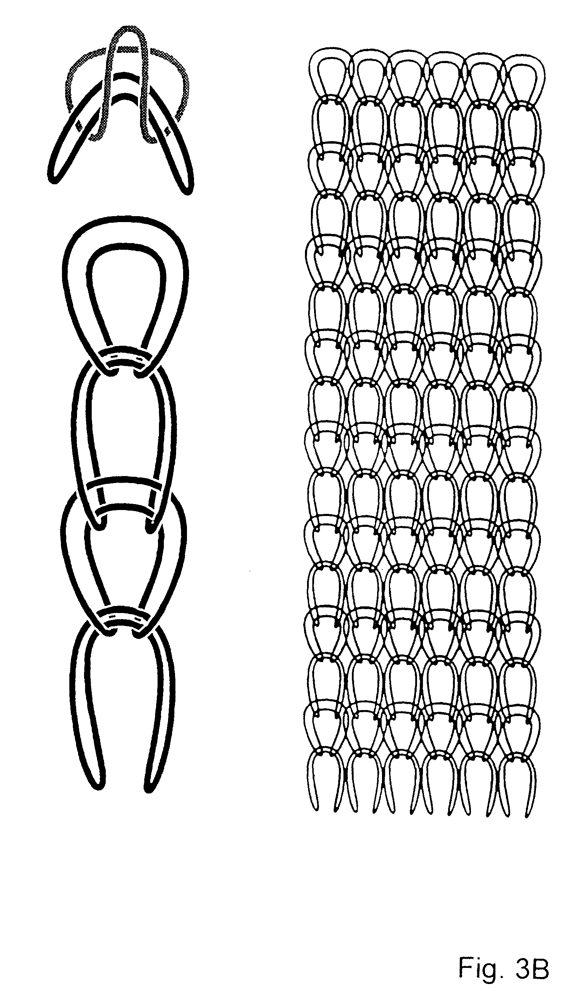

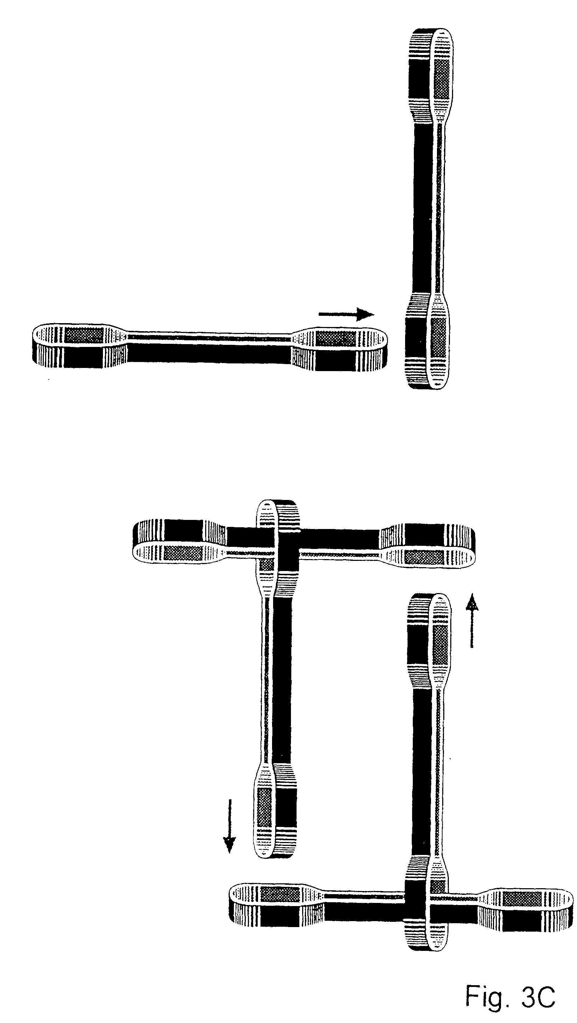

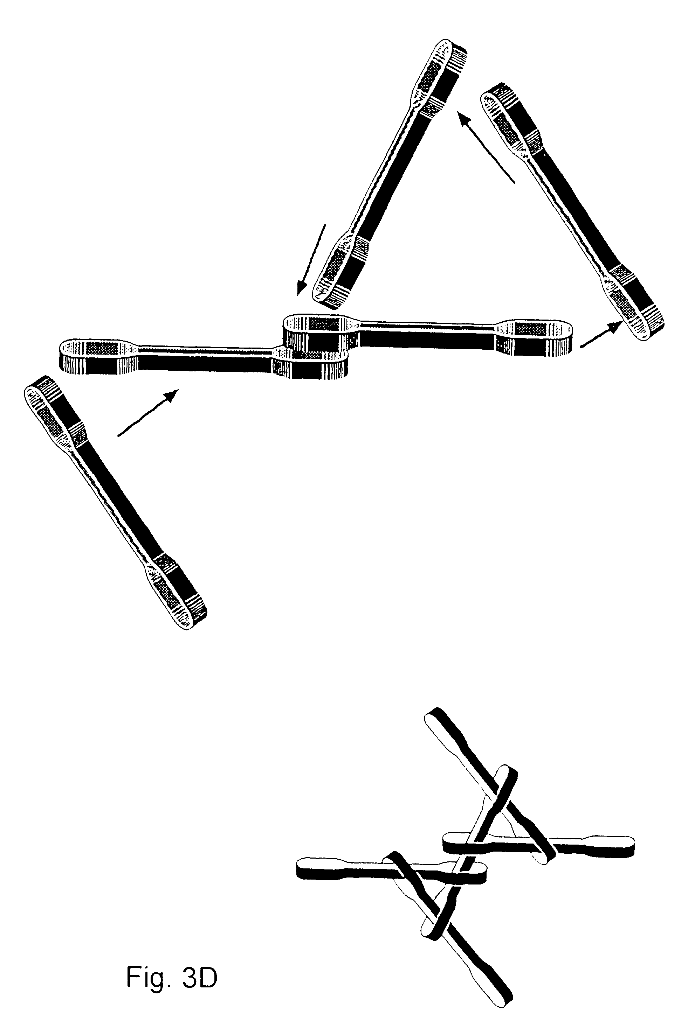

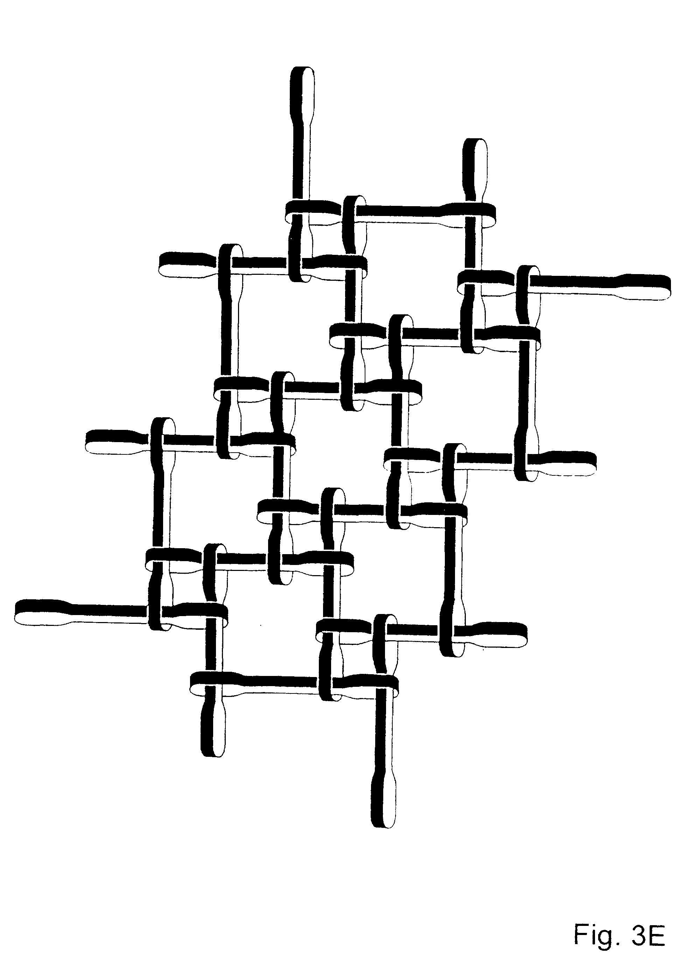

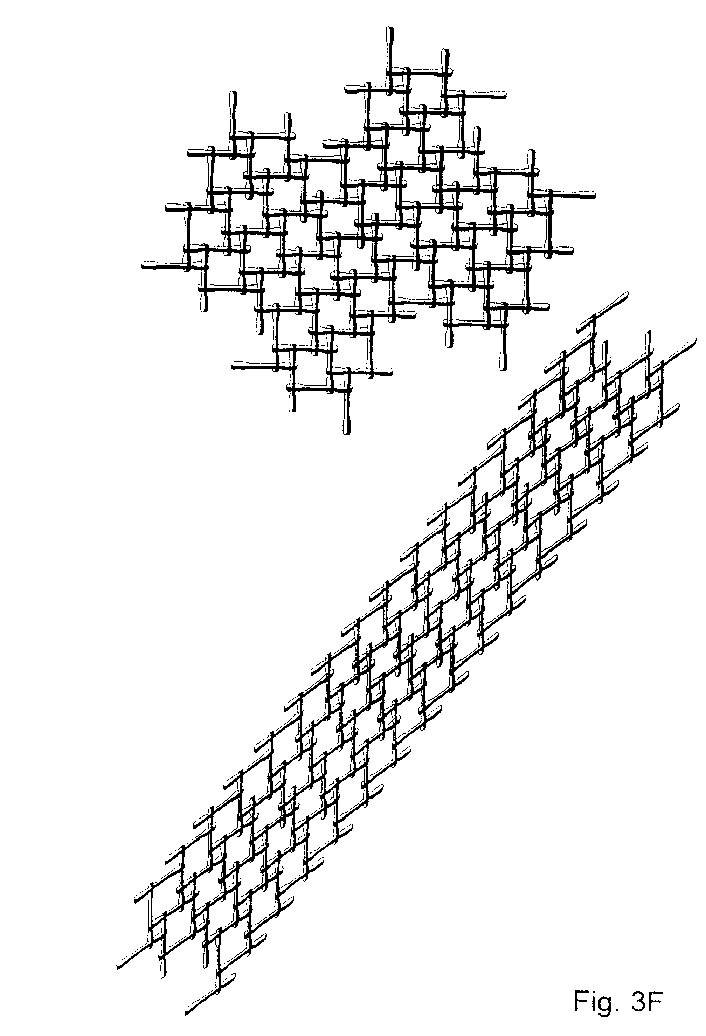

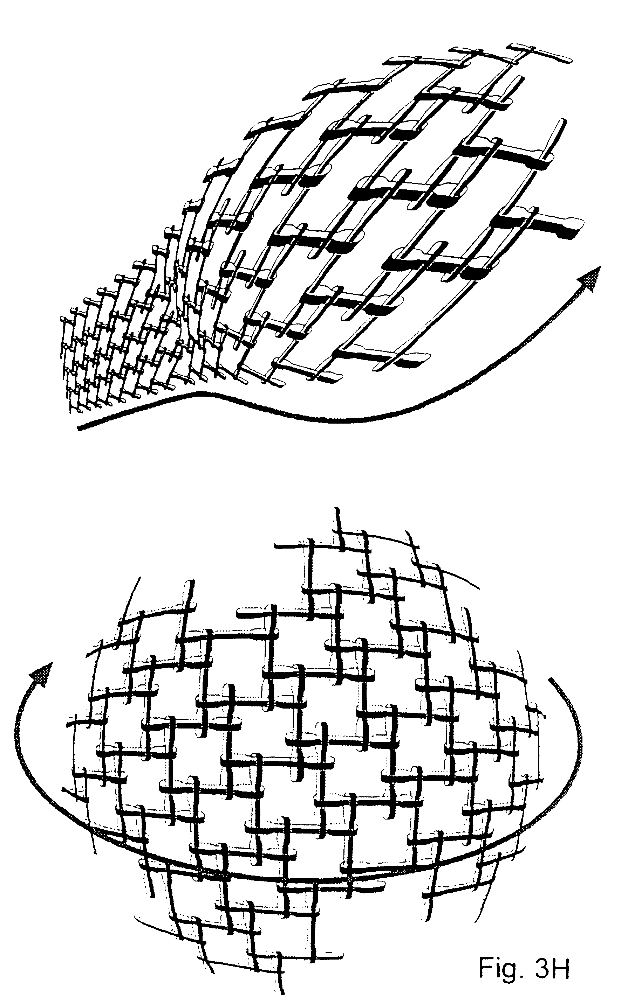

Die Figur 3A zeigt die Entstehung einer Ringkette, bei welcher die einzelnen Ringe ineinander verknotet sind. Figur 3B zeigt die Entstehung eines Geflechtes. In der Figur 3C ist der Aufbau eines Grundelementes als Viererelement und in der Figur 3E als Dreierelement dargestellt. Die Figur 3E zeigt die Entstehung eines Netzes aus Grundelementen gemäß der Figur 3C. In der Figur 3F ist der Aufbau einer Matte gezeigt, die Figur 3D zeigt einen als Quader ausgebildeten Körper und die Figur 3H die Entstehung eines gewölbten Körpers. In der Figur 3K ist ein Ausschnitt aus einer geflochtenen Matte dargestellt. Die Figur 31 zeigt einen geflochtenen Sack, welcher der Aufnahme von beispielsweise Schüttgut dienen kann. In der Figur 3M ist ein geflochtener röhrenförmiger Hohlkörper dargestellt, welcher mit einem gewölbten Boden verschlossen ist. Die Figur 3N zeigt einen Ausschnitt aus einer zweiten geflochtenen Matte und die Figur 30 einen Ausschnitt aus einer dritten geflochtenen Matte. In den Figuren 3P-3U sind weitere Flechtvarianten zur Realisierung von Bausteinen für beispielsweise Stränge, Matten und Körper gezeigt.

Nachfolgend sollen verschiedenste Anwendungsgebiete von durch Flechten von geschlossenen Ringen hergestellten neuen Produkten beschrieben werden. Eine Anwendung ist den Aufbau von Dämmen, welche in ihrem Inneren gefüllte Hohlkörper 13 oder Flechtkörper 25 aufweisen. Durch die Hohlkörper 13, die Flechtkörper 25 oder auch die Anordnung von Matten 9 erfolgt eine Stabilisierung der Dammkonstruktion, so daß die Dämme wesentlich höheren Belastungen standhalten als lediglich aus Erde 15 aufgeschüttete Dämme.

Figur 5 zeigt die Anordnung von Matten als Uferschutzmaßnahme, wobei im vorliegenden Ausführungsbeispiel zwei Matten 9 übereinander angeordnet sind. Die Matten 9 sind im Ufer 10 eingelassen, und der durch das Wasser 11 erzeugte Druck verteilt sich über die Matten 9 und schützt das Ufer 10 auch gegen Anschwämmung und Abtragung. Diese Schutzmaßnahme ist sowohl an Kanälen als auch an natürlichen Ufern anwendbar.

Die Figur 6 zeigt die Anordnung von Matten 9 auf dem Gewässergrund 12, wobei durch diese Anordnung ein Abtragen von beispielsweise Sand und damit die Entstehung von Ausspühlungen verhindert wird. In der Figur 7 sind mit Schüttgut, beispielsweise Sand, gefüllte Hohlkörper 13 dargestellt, welche als künstliche Dämme im Wasser 11 in beliebiger Länge, Höhe und Breite aufgestellt werden können. Eine weitere Realisierungsform von Hohlkörpern 13 ist in Figur 8 dargestellt, wobei hier die Hohlkörper 13 mit Wasser 11 gefüllt sind. Damit das Wasser nicht durch die Zwischenräume im Flechtwerk ablaufen kann, sind die Hohlkörper 13 innen mit einer Folie 14 ausgekleidet.

In Figur 9 ist eine Dammauskleidung aus geflochtenen Matten 9 dargestellt, wobei die Dammauskleidung mit Erde 15 bedeckt ist und der Damm einen Konterschacht 16, welcher ebenfalls durch die Matten 9 ausgekleidet ist, aufweist. In der Figur 10 ist eine einfache Form einer Uferbefestigung aus geflochtenen Matten 9 dargestellt, wobei die Matten 9 hier teilweise in das Wasser 11 sowie die am Ufer 10 befindliche Erde 15 hineinreicht. Figur 11 zeigt die Realisierung von Faschinen zum Uferschutz, wobei hier die Ringe 1 mit Pfählen 17 zusammenwirken. In den Figuren 12 und 13 ist der Ausgleich von Unebenheiten am Gewässergrund dargestellt. Gemäß dem Ausführungsbeispiel in Figur 12 wird die Unebenheit 18 durch eine Matte 9 abgedeckt, im Ausführungsbeispiel gemäß Figur 13 wird die Unebenheit durch Matten 9 ausgefüllt. In der Figur 14 ist das Abdecken von Unterwasserriffen 19 mit Matten 9 dargestellt. Diese Maßnahme dient dem Schutz von Wasserfahrzeugen gegen Kollision.

Figur 15 zeigt die Realisierung abgegrenzter Räume zur Fischaufzucht, wobei die Abgrenzung der Räume durch Matten 9 erfolgt. Im Inneren der durch die Matten 9 begrenzten Räume können Fische effektiv aufgezogen werden. Figur 16 zeigt die Anordnung von Matten 9 zum Schutz von Korallenbänken.

In Figur 17 ist ein Anwendungsbeispiel dargestellt, bei welchem der Innenraum von Schleusenbecken 21 mit Matten 9 ausgekleidet ist. Die Matte 9 kann dazu dienen, um Schiffe, beispielsweise Sportboote, zu bergen und zu sichern. In Figur 18 ist die Anwendung der Matten 9 zum Schutz vor Eiseinbruch dargestellt. Die Matten 9 sind an Schwimmkörpern 22 befestigt, welche unterhalb der Wasseroberfläche angeordnet sind. Überfriert nun das Gewässer mit einer Eisfläche 23, so befindet sich unter der Eisfläche 23 das Schutzgebilde aus Matten 9 und Schwimmkörpern 22. Bricht nun eine Person durch die Eisfläche 23 ein, so wird sie durch die Matten 9 vor dem Untergehen bzw. dem Ertrinken bewahrt.

Die Anordnung der Matten 9 gemäß Figur 19 dient der Entfernung von Unrat in Teichen, beispielsweise in Feuerwehrteichen, indem die Matten 9 gehoben werden. In Figur 20 ist eine Anwendung der Matten 9 in Flüssen 24 dargestellt, wobei die Matten 9 am Flußboden angeordnet sind und diesen auskleiden. Durch die Auskleidung wird einem Bodenabtrag und einem Sedimentauftrag vorgebeugt.

Die Figuren 21 bis 23 zeigen die Anordnung von Matten 9 bzw. von Flechtkörpern 25 als Wellenabsorber bzw. Wellenbrecher. Die Matten 9 bzw. die Flechtkörper 25 sind ganz oder teilweise unter Wasser angeordnet. In Figur 24 ist ein Ausführungsbeispiel dargestellt, bei welchem Flechtkörper 25 zum Schutz von Kaianlagen 27 angeordnet sind. Die Flechtkörper 25 können mit Schwimmkörpern 22 zusammenwirken, auf dem Gewässergrund 12 verankert oder im Gewässergrund 12 eingebunden sein. In Figur 25 ist allgemein der Schutz von Bauwerken durch Flechtkörper 25 dargestellt. Anstelle der Flechtkörper 25 können auch Matten 9 verwendet werden. Ausgewählte Bauwerke im vorliegenden Ausführungsbeispiel sind Häuser, welche gegen Berührung mit einem Bagger geschützt werden oder wasserbauliche Anlagen, wie Häfen oder Brücken. Der Schutz speziell von Brückenpfeilern 28 ist in Figur 26 dargestellt, wobei hier die Brückenpfeiler 28 durch Matten 9 ummantelt sind. Ein weiteres Ausführungsbeispiel zum Schutz von Brückenpfeilern 28, Stegen und Dämmen vor Beschädigung ist in Figur 27 dargestellt. Zur Anwendung gelangen entweder Matten 9, welche mit Schwimmkörpern zusammenwirken, oder Flechtkörper 25. Die Flechtkörper 25 bzw. die Matten 9 sind vor den Brückenpfeilern 28 angeordnet. Figur 28 zeigt die Anordnung von Flechtkörpern 25 im Wasser zum Schutz vor Eisgang auf Flüssen, Seen und Meeren. Durch die Flechtkörper 25 werden die Eismassen abgefangen, so daß Schäden verhindert werden können. In Figur 29 ist der Einsatz von Matten 9 oder Flechtkörpern 25 als Filter dargestellt. So können beispielsweise die Matten 9 von einem Schiff 31 durch das Wasser 11 gezogen werden, um Verunreinigungen durch die Netzstruktur der Matten 9 abzufischen. Ebenso ist es möglich in Kläranlagen 29 Matten 9 einzubringen, welche Verunreinigungen herausfischen. Eine weitere Anwendungsmöglichkeit der Matten 9 besteht darin, diese vor dem Einlauf von Sammelbecken anzuordnen, so daß Verunreinigungen herausgefiltert werden. In Figur 30 ist die Anordnung von Matten 9 bzw. von Flechtkörpern 25 als aktiver Personen- und Tierschutz dargestellt. Die Matten 9 bzw. die Flechtkörper 25 beugen möglichen Abstürzen vor. Die Anordnung von Matten 9 an der Außenhaut eines Schiffes 31 schützt die Schiffsaußenwand vor mechanischen Beschädigungen. Der Einsatz von Matten 9 für Erdbefestigungen ist in Figur 32 dargestellt. Ein spezielles Anwendungsgebiet ist die Abhangbefestigung, wobei hier sowohl eine einzelne Matte 9 oder mehrere übereinander angeordnete Matten 9 eingesetzt werden können. In Figur 33 ist die Anwendung von Matten 9 als Pflanzenschutz dargestellt. Die Erdfläche 15 ist mit Matten 9 belegt, und in die durch das Flechtwerk gebildeten Zwischenräume werden Pflanzen 32 angepflanzt. Figur 34 zeigt den Einsatz von Matten 9 zur Realisierung von Dämmen und Speicherbecken. Ein spezielles Anwendungsgebiet ist der Bau von Auffangbecken für Wasser aus Hochwasser führenden Flüssen. Die Matte 9 ist in einen Graben eingelegt und stabilisiert den Damm des Speicherbeckens. Anstelle der Realisierung von Speicherbecken können die mittels der Matten 9 stabilisierten Dämme auch zur Realisierung von Salzgewinnungsbecken dienen. Die Figur 35 zeigt die Anwendung von Matten 9 oder Flechtkörpern 25 als Lawinenschutz. Die Matten 9 bzw. die Flechtkörpern 25 sind am Hang 33 angeordnet und dienen dem Abfangen von Lawinen. Figur 36 zeigt die Verwendung von Matten 9 oder Flechtkörpern 25 in Fundamenten. Es ist möglich, durch die Matten 9 bzw. die Flechtkörper 25 sowohl Streifenfundamente als auch vollflächige Fundamente zu stabilisieren. In Figur 37 ist die Anordnung von Matten 9 als Straßenuntergrund dargestellt. Die Matten 9 werden unter der Straße 34 angeordnet. Anstelle von Straßen 34 sind selbstverständlich auch Wege und Plätze, insbesondere Sportplätze, in ihrem Untergrund durch die Matten 9 stabilisierbar. Figur 38 zeigt die Anwendung von Matten 9 als Rohr- bzw. Kabelschacht. Die Rohre 35 bzw. die Kabel 36 werden durch die Matten 9 eingebettet und gegebenenfalls überlappend abgedeckt. In der Figur 39 ist die Anwendung der Matten 9 bzw. der Flechtkörper 25 als Schutzelemente bei Sprengungen dargestellt. So können die Matten 9 Bombenschutzmatten realisieren oder für den Einsatz zur Sprengung von Fundmunition angeordnet werden. Weiterhin ist es möglich, Flechtkörper 25, versetzt angeordnet, als Schutzelemente bei Spengarbeiten einzusetzen. Um den Evakuierungsradius beim Bergen von Bomben einzugrenzen bzw. die Splitterwirkung bei Sprengungen zu minimieren, können Bomben oder sonstige Fundmunition durch Matten 9 und/oder Flechtkörper 25 abgedeckt werden.

Der Verhinderung von Steinschlag dient die Anordnung von Matten 9, wie in Figur 40 dargestellt. Die Verwendung von Matten 9 oder Flechtkörpern 25 zur Realisierung von Schutzbauten, beispielsweise in Erdbebengebieten, ist in Figur 41 dargestellt. Durch die Matten 9 bzw. die Flechtkörper 25 können Unterstände, oder wie in Figur 42 gezeigt, Bunkerbauten 38 realisiert werden. Bei den Bunkerbauten 38 können die Außenflächen durch Matten 9 gedämmt werden. Ebenso können durch die Matten 9 bzw. die Flechtkörper 25 Unterstellmöglichkeiten im Gebirge realisiert werden, welche auch einen Blitzschutz bieten. Dies resultiert daraus, daß durch die Metallbestandteile im Flechtwerk ein faradayscher Käfig realisiert wird.

Fig. 43 zeigt den Einsatz von Matten 9 in Verbindung mit Leitplanken 39. Hier sind die Matten 9 derart angeordnet, daß sie eine Auffangmöglichkeit für von der Straße abgekommene Fahrzeuge bilden. Durch die Elastizität der Matten 9 werden Beschädigungen an den Fahrzeugen minimiert. Fig. 44 zeigt den Einsatz von Flechtkörpern 25 bzw. von Matten 9 als Verkehrsleitelemente und als Aufprallschutz im Straßenverkehr. Die Elemente sind neben der Straße 34, vorrangig im Bereich von Kurven, angeordnet. In Fig. 45 ist die Verwendung von Matten 9 als Drainage neben der Straße 34 dargestellt. Die Matten 9 sind im vorliegenden Ausführungsbeispiel eingerollt und erfüllen hierdurch die Drainagefunktion. In Fig. 46 sind die Matten 9 als Zaun eingesetzt und dienen der Abgrenzung von Gebieten gegen Mensch und Tier. Auch gegen Schneeverwehungen oder andersartige Verwehungen, beispielsweise in der Nähe von Mülldeponien, sind derartige Zäune anwendbar. Fig. 47 zeigt eine Anwendungsvariante als lastverteilende Elemente. Durch die Matten 9 kommt es beim Aufsetzen von Lasten zu einer Lastverteilung und dadurch zu einer Verminderung des Bodendruckes. Zum Schutz von Bäumen sind die in Fig. 48 dargestellten Anwendungsfälle der Matten 9 geeignet. So können die Bäume 41 einerseits durch Matten 9 am Stamm ummantelt werden, andererseits kann der Wurzelbereich des Baumes 41 mit Matten 9 belegt werden. Zur Abdeckung von Silage ist die Anwendung der Matten 9, wie in Fig. 49 dargestellt, geeignet. Der Inhalt der Siloanlage 42 wird mit Matten 9 belegt, so daß einerseits eine Abdeckung, andererseits eine Beschwerung resultiert. Der Einsatz der Matten 9 als Deponiebegrenzung ist in Fig. 50 dargestellt. Sowohl unterhalb als auch oberhalb des Deponiekörpers 43 sind Matten 9 angeordnet, welche einerseits den Deponiekörper 43 abdecken, andererseits den Deponiekörper 43 gegenüber dem umgebenden Erdreich abgrenzen. Zur Realisierung sich erhöhender Einfahrten ist die Anordnung von Matten gemäß Fig. 51 geeignet. Je nachdem, wie sich beispielsweise der Deponiekörper 43 erhöht, werden Matten versetzt übereinander angeordnet. Eine Verwendung der Matten 9 als Brandmatten ist in Fig. 52 dargestellt. Die Matten werden ausgelegt und angezündet, um ein Gegenfeuer zu erzeugen. Hierdurch wird das übergreifen von Feuer, beispielsweise bei Waldbränden, wirksam verhindert. Dem Anlegen von beispielsweise Reisfeldern 44 dient die Anordnung der Matten 9 gemäß Fig. 54. Die Verwendung von Matten in Wüstengebieten ist in Fig. 55 dargestellt, wo Matten 9 in den Straßen bzw. Wegeverlauf 34 eingebracht sind. Kommt es zur Fahrbahnüberwehungen so kann mittels Metalldetektor der ursprüngliche Verlauf der Straße 34 geortet werden, indem der Metalldetektor auf die in den Matten befindlichen Metallteile anspricht. Die Matten 9 und Flechtkörper 25 können mit Hilfe von Trägereinheiten beispielsweise gasgefüllter Ballon, Hubschrauber oder Luftschiff, transportiert bzw. stationiert werden. Ein Transport ist, wie aus Fig. 56 ersichtlich, sowohl in waagerechter als auch in senkrechter Lage möglich. Der Einsatz von Matten 9 und Flechtkörpern 25 im Weltraum ist in Fig. 57 angedeutet, wo durch die Matten 9 bzw. Flechtkörper 25 ein Sicherheitskäfig realisiert wird, in welchem Weltraumtechnik 45 anordenbar ist.

Die Erfindung ist nicht beschränkt auf die hier dargestellten Ausführungsbeispiele. Vielmehr ist es möglich, durch Kombination und Modifikation der genannten Mittel und Merkmale weitere Ausführungsvarianten zu realisieren, ohne den Rahmen der Erfindung zu verlassen.

### Bezugszeichenliste

- 1: Lauffläche
- 2: Seitenringe
- 3: Reifen
- 9: Matte
- 10: Ufer
- 11: Wasser
- 12: Gewässergrund
- 13: Hohlkörper
- 14: Folie
- 15: Erde
- 16: Konterschacht
- 17: Pfahl
- 18: Unebenheit
- 19: Riff
- 20: Fische
- 21: Schleusenbecken
- 22: Schwimmkörper
- 23: Eisfläche
- 24: Fluß
- 25: Flechtkörper
- 26: Wellen
- 27: Kaianlage
- 28: Brückenpfeiler
- 29: Kläranlage
- 30: Einlauf
- 31: Schiff
- 32: Pflanzen
- 33: Hang
- 34: Straße
- 35: Rohr
- 35: Rohr
- 36: Kabel
- 37: Erdspalte
- 38: Bunker
- 39: Leitplanke
- 40: Last
- 41: Baum
- 42: Siloanlage
- 43: Deponiekörper
- 44: Reisfelder
- 45: Weltraumtechnik

## Patentansprüche

1. Verfahren zum Verarbeiten von Reifen und zur Herstellung von aus dem Reifenmaterial bestehenden Produkten, wobei die Reifen durch eine Aufeinanderfolge von Schnitten zerlegt werden
**dadurch gekennzeichnet,**
**daß** die zwei Seitenteile von der Lauffläche abgetrennt und die entstehenden Ringe durch Flechten zu neuen Produkten miteinander verbunden werden.

2. Verfahren nach Anspruch 1,
**dadurch gekennzeichnet,**
**daß** die neuen Produkte Flächengebilde oder Körper sind.

3. Verfahren nach Anspruch 2,
**dadurch gekennzeichnet,**
**daß** die Flächengebilde Matten oder Stränge und die Körper Blöcke oder Hohlkörper sind.

4. Verfahren nach Anspruch 1,
**dadurch gekennzeichnet,**
**daß** aus dem aus der Lauffläche gebildeten Ring durch weitere Schnitte entlang des Umfanges schmale Ringe mit gleichem Durchmesser erzeugt werden.

5. Verfahren nach Anspruch 1,
**dadurch gekennzeichnet,**
**daß** aus den aus den Seitenteilen gebildeten Ringen durch weitere Schnitte schmale Ringe mit unterschiedlichem Durchmesser erzeugt werden.

6. Verfahren nach mindestens einem der Ansprüche 1 bis 5,
**dadurch gekennzeichnet,**
**daß** die Herstellung der einzelnen Ringe mittels einer stationären Schneidanlage oder mittels einer mobilen Schneidanlage erfolgt.

7. Verfahren nach Anspruch 6,
**dadurch gekennzeichnet,**
**daß** die Reifen zum Antransport zu der stationären Schneidanlage einmal entlang der Mitte der Lauffläche durchschnitten werden derart, daß zwei U-förmig ausgebildete Reifenteile entstehen, welche ineinander stapelbar sind.

8. Verfahren nach Anspruch 1,
**dadurch gekennzeichnet,**
**daß** sich der Gummi beim Schneiden im gespannten Zustand befindet.

9. Block, Hohlkörper, Matte oder Strang, bestehend aus miteinander durch Flechten verbundenen Ringen aus geschnittenen Reifen.

10. Verfahren zur Herstellung der Produkte Block, Hohlkörper, Matte oder Strang nach Anspruch 9,
**dadurch gekennzeichnet,**
**daß** zum Verflechten der Ringe der Ausgangsring derart zusammengedrückt wird, daß rechts und links in etwa gleichgroße Schlaufen entstehen und ein weiterer Ring durch diese beiden Schlaufen hindurchgeführt wird, derart, daß der durchgeführte Ring wiederum zwei Schlaufen bildet.

11. Verfahren nach Anspruch 10,
**dadurch gekennzeichnet,**
**daß** der Außenring und/oder der Endring arretiert wird, um ein Öffnen zu verhindern.

12. Verfahren zum Herstellen der Produkte Block, Hohlkörper, Matte oder Strang nach Anspruch 10,
**dadurch gekennzeichnet,**
**daß** das Flechten manuell oder maschinell erfolgt.

13. Verfahren nach Anspruch 12,
**dadurch gekennzeichnet,**
**daß** das Flechten am Einsatzort für die Blöcke, Matten oder Stränge erfolgt.

14. Verwendung von aus Ringen durch Flechten hergestellten Matten, Hohlkörpern, Blöcken oder Strängen gemäß Anspruch 3 zur Realisierung von Dammbefestigungen und/oder Uferschutzmaßnahmen und/oder Gewässergrundbehandlungen und/oder künstlichen Dämme und/oder Schutzmaßnahmen an Riffen und Korallenbänken und/oder Fischaufzuchtmaßnahmen und/oder Bergungsfunktionen in Schleusen oder Teichen und/oder Eiseinbruchschutzmaßnahmen und/oder Wellenschutzmaßnahmen und/oder Kollisionsschutzmaßnahmen an Bauwerken und/oder Filter- bzw. Reinigungsfunktionen und/oder Erdbefestigungen und/oder Pflanzenschutzmaßnahmen und/oder Lawinen- bzw. Steinschlagschutzmaßnahmen und/oder Untergrundbefestigungen in Fundamenten, Straßen und Plätzen und/oder Kabel- oder Rohrschächten und/oder Sprengschutzelementen und/oder Schutzbauten und/oder Verkehrsleitelementen und/oder Baumschutzmaßnahmen und/oder Drainagefunktionen und/oder Abgrenzungen und/oder Lastverteilungselementen und/oder Siloabdeckungen und/oder Deponiebegrenzungen und/oder Brandmatten und/oder Fahrbahnmarkierungen und/oder landwirtschaftlichen Flächen.

## Claims

1. Method for processing tires and the manufacture of products composed of the tire material wherein the tires are dismembered by a sequence of cuts,
**characterized in that**
the two side walls are separated from the running tread and the rings arising are combined together to new products by means of a weaving process.

2. Method according to claim 1,
**characterized in that**
the new products are interwoven mesh surface structures or bodies.

3. Method according to claim 2,
**characterized in that**
the interwoven mesh surface structures are mats or aligned units and the bodies are three-dimensional blocks or hollow bodies.

4. Method according to claim 1,
**characterized in that**
narrower rings of equal diameter are generated from further cuts along the circumference of the ring produced from the running tread.

5. Method according to claim 1,
**characterized in that**
narrower rings of varying diameter are generated from further cuts along the circumference of the ring produced from the side walls.

6. Method according to at least one of the claims 1 to 5,
**characterized in that**
production of the individual rings is carried out by means of permanently installed cutting facilities or by means of mobile cutting facilities.

7. Method according to claim 6,
**characterized in that**
the tires are cut with a single cut along the middle of the running tread in such a way that two U-shaped tire parts result which can be stacked inside each other for the purpose of their transportation to the permanent cutting facilities.

8. Method according to claim 1,
**characterized in that**
the rubber is kept under tension during the process of cutting.

9. Block, hollow body, mat or aligned units consist of interwoven rings from cut up tires.

10. Method for producing the products block, hollow body, mat or aligned units according to claim 9,
**characterized in that**
for the purpose of interweaving the rings, the initial ring is pressed together in such a way that approximately equal size loops are formed to the left and right and that a further ring is fed through both of these loops such that the ring fed through forms two further loops.

11. Method according to claim 10,
**characterized in that**
the external ring and/or end ring is prevented from opening by means of fixation.

12. Method for producing the products block, hollow body, mat or aligned units according to claim 10,
**characterized in that**
the interweaving is carried out manually or by a machine.

13. Method according to claim 12,
**characterized in that**
the interweaving process for blocks mats or aligned units is carried out at the place of deployment.

14. The use of mats, hollow bodies, blocks or aligned units produced by interweaving rings according to claim 3 for the construction of dam reinforcement and/or bank protection measures and/or treatment of the beds of bodies of water and/or artificial dams and/or protective measures on reefs and coral banks and/or fish breeding measures and/or recovery measures in sluice locks or pools and/or protective measures against breaking through ice sheets and/or wave protection measures and/or collision protective measures close to building structures and/or filtration or cleaning functions and/or earth consolidation and/or plant protective measures and/or avalanche or falling rock protective measures and/or substrate consolidation in foundations, roads and open spaces and/or cable or pipe shafts and/or explosion protective elements and/or shelters and/or traffic guidance elements and/or tree protective measures and/or drainage functions and/or demarcations and/or load redistribution elements and or silage covers and/or landfill demarcations and or fire mats and/or roadway marking and/or agricultural areas.

## Revendications

1. Procédé de transformation de pneumatiques et de fabrication de produits constitués du matériau de pneumatique ; les pneumatiques étant découpés au moyen d'une succession de coupes, **caractérisé en ce qu'**on sépare les deux parties latérales de la surface de roulement et **en ce qu'**on relie par tressage entre eux les anneaux qui résulte de cette séparation pour obtenir de nouveaux produits .

2. Procédé selon la revendication 1, **caractérisé en ce que** les nouveaux produits sont des constructions bidimensionnelles ou des corps.

3. Procédé selon la revendication 2, **caractérisé en ce que** les constructions bidimensionnelles sont des nattes ou des cordons et que les corps sont des blocs ou des corps creux.

4. Procédé selon la revendication 1, **caractérisé en ce qu'**on fabrique à partir de l'anneaux formé par la surface de roulement des anneaux minces du même diamètre en effectuant des découpes supplémentaires le long de la circonférence.

5. Procédé selon la revendication 1, **caractérisé en ce qu'**on fabrique à partir des anneaux, formés par les parties latérales, des anneaux minces de différents diamètres en effectuant des découpes supplémentaires.

6. Procédé selon au moins une des revendications 1 à 5, **caractérisé en ce que** la fabrication des anneaux est effectuée au moyen d'une installation de découpe stationnaire ou d'une installation de découpe mobile.

7. Procédé selon la revendication 6, **caractérisé en ce qu'**on découpe une fois les pneumatiques pour le transport vers l'installation de découpe stationnaire le long de la ligne médiane de la surface de roulement de manière à créer deux parties de pneumatique en forme de U qui sont susceptibles d'être empilées l'une dans l'autre.

8. Procédé selon la revendication 1, **caractérisé en ce que** le caoutchouc est en état de tension pendant la découpe.

9. Bloc, corps creux, natte ou corde composés d'anneaux de pneumatiques découpés et liés entre eux par tressage.

10. Procédé de fabrication des produits sous forme de bloc, corps creux, natte ou corde selon la revendication 9, **caractérisé en ce que** pour le tressage des anneaux on comprime l'anneau de départ de manière à créer, à droite et à gauche, des boucles de taille à peu près identique et **en ce qu'**on fait passer à travers de ces deux boucles un anneau supplémentaire de sorte que l'anneau que l'on fait passer forme à nouveau deux boucles.

11. Procédé selon la revendication 10,
**caractérisé en ce qu'**on bloque l'anneau extérieur et / ou l'anneau terminal pour empêcher une ouverture.

12. Procédé de fabrication des produits sous forme de bloc, corps creux, natte ou corde selon la revendication 10, **caractérisé en ce qu'**on tresse manuellement ou mécaniquement.

13. Procédé selon la revendication 12, **caractérisé en ce qu'**à l'endroit de l'utilisation on tresse des blocs , nattes ou cordes.

14. Utilisation de nattes, corps creux, blocs ou cordes fabriqués par tressage à partir d'anneaux selon la revendication 3, pour réaliser des fortifications de digues et / ou des mesures de protection des rives, et / ou des digues artificielles et / ou des mesures de protection des récifs et de bancs de coraux et / ou des mesures d'élevages de poissons et / ou des fonctions de sauvetage dans des écluses ou des étangs et / ou des mesures de protection contre les vagues et / ou des mesures de protection contre des collisions sur des bâtiments et / ou des fonctions de filtrage ou de nettoyage et / ou des fortification de terrain et / ou des mesures de protection de plantes et /ou des mesures de protection contre les avalanches ou les chutes de pierres et / ou des fortifications souterraines dans des fondations , rues et places et / ou des boîtes de raccordement de lignes ou conduites souterraines et / ou des éléments de protection contre les explosifs et / ou des bâtiments de protection et / ou des éléments de signalisation routière et ou / ou des mesures de protection d'arbres et / ou des fonctions de drainage et / ou des limitations et / ou des éléments de distribution de charges et / ou des couvertures de silos et / ou des limitation de décharge de déchets et / ou des nattes contre l'incendie et / ou des marquages de route et / ou des terrains agricoles.
